(19)

Europäisches Patentamt
European Patent Office
Office européen des brevets

(11) **EP 4 694 301 A1**

(12) **EUROPEAN PATENT APPLICATION**
published in accordance with Art. 153(4) EPC

(43) Date of publication:
**11.02.2026 Bulletin 2026/07**

(21) Application number: **24778157.8**

(22) Date of filing: **28.03.2024**

(51) International Patent Classification (IPC):
**H04W 24/10** (2009.01)

(52) Cooperative Patent Classification (CPC):
**G06F 9/50; H04B 7/06; H04W 24/10; H04W 72/044; H04W 72/21; H04W 72/51; H04W 72/541; H04W 72/542**

(86) International application number:
**PCT/CN2024/084476**

(87) International publication number:
**WO 2024/199371 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 CN 202310333273**

(71) Applicants:
• **CHINA MOBILE COMMUNICATION CO., LTD RESEARCH INSTITUTE**
  **Beijing 100053 (CN)**
• **CHINA MOBILE COMMUNICATIONS GROUP CO., LTD.**
  **Beijing 100032 (CN)**

(72) Inventors:
• **CAO, Yuhua**
  **Beijing 100053 (CN)**
• **ZUO, Jun**
  **Beijing 100053 (CN)**
• **ZHENG, Yi**
  **Beijing 100053 (CN)**
• **LIU, Yongchang**
  **Beijing 100053 (CN)**
• **WANG, Fei**
  **Beijing 100053 (CN)**

(74) Representative: **Murgitroyd & Company**
**165-169 Scotland Street**
**Glasgow G5 8PL (GB)**

(54) **CSI PROCESSING UNIT CALCULATION METHOD AND APPARATUS, TERMINAL, AND NETWORK DEVICE**

(57) This application provides a method for calculating a channel state information (CSI) processing unit, a device, a terminal, and a network device. The method includes: transmitting, by a terminal, first information and/or second information to a network device; wherein the first information comprises a number of first-type CSI computations that the terminal is capable of supporting simultaneously, and a CSI report of the first-type CSI computation is a first-type CSI report; and the second information comprises a number of second-type CSI computations that the terminal is capable of supporting simultaneously, and a CSI report of the second-type CSI computation comprises the first-type CSI report and a second-type CSI report. By using this method, the terminal can calculate CPU in an adaptive manner according to AI processing capability, thereby introducing a differentiated CPU computing mechanism for AI.

Reporting first information and/or second information to a network device;
wherein the first information includes a number of first-type CSI calculations that the terminal is capable of supporting simultaneously, and a CSI report of the first-type CSI calculation is a first-type CSI report;
the second information includes a number of second-type CSI calculations that the terminal is capable of supporting simultaneously, and a CSI report of the second-type CSI calculation includes the first-type CSI report and a second-type CSI report.

S110

FIG. 1

# EP 4 694 301 A1

**Description**

## CROSS-REFERENCE TO RELATED APPLICATIONS

This application claims priority to Chinese Patent Application No. 202310333273.7 filed in China on March 31, 2023, the entire contents of which are incorporated herein by reference.

## TECHNICAL FIELD

The present invention relates to the field of wireless technology, and in particular to a computation method, an apparatus, a terminal, and a network device for a CSI processing unit.

## BACKGROUND

In the existing new radio (NR) channel state information (CSI) measurement and reporting framework, a concept of CSI processing unit (CPU) is introduced.

In a channel state information (CSI) compression feedback use case based on artificial intelligence (AI), a terminal is required to deploy a CSI construction module, and a network is required to construct a CSI recovery module, which is used to recover CSI information received from the terminal side. Both the CSI construction module and the CSI recovery module need to use AI algorithms to perform supporting CSI compression and decompression processes. These modules are usually equipped with specific AI algorithms, and some specific AI algorithms require specific chip processing speeds to support algorithm execution, such as requiring a specific floating-point operations per second (FLOPs) as an indicator to represent a required AI capability.

An AI-based CSI processing procedure usually requires that a terminal or a network has a special AI processing capability, such as AI inference or AI training capability. However, different terminals may have different AI processing capabilities. For use cases such as AI-based CSI compression feedback, CSI prediction, and beam management, how to determine a processing capability of a terminal for CSI computation to achieve differentiated CPU processing unit computation between a terminal and a network side is an important technical problem that needs to be solved at present.

## SUMMARY

An objective of the technical solution of the present invention is to provide a computation method, an apparatus, a terminal, and a network device for a CSI processing unit, which are used to provide a processing capability of a terminal for performing different types of CSI computations, so that the terminal and a network side can perform differentiated CPU processing unit computation according to the processing capability.

In one embodiment of the present invention, a computation method of a channel state information (CSI) processing unit is further provided, wherein the method is executed by a terminal, and the method includes:

reporting, to a network device, first information and/or second information;

wherein the first information includes a number of first type CSI computations that the terminal can support simultaneously, and a CSI report of the first type CSI computation is a first type CSI report;

the second information includes a number of second type CSI computations that the terminal can support simultaneously, and a CSI report of the second type CSI computation includes the first type CSI report and the second type CSI report.

Optionally, in the computation method, the method further includes:

determining, according to a type of CSI report configured by higher layer signaling, a number of CSI processing units (CPUs) required to be occupied by the CSI report.

Optionally, in the computation method, the method further includes:

determining, according to at least one of a preset rule, a configuration of a network device, and a reporting capability of the terminal, a number of CPUs occupied by the CSI report.

Optionally, in the computation method, in a case of reporting the first information to the network device, determining, according to a preset rule, a number of CPUs occupied by the CSI report includes one or more of the following:

for a CSI report configured by higher layer signaling that is not the first type CSI report, determining that the corresponding CSI report does not occupy the CPU;

for a CSI report whose configured CSI reporting quantity is none and whose corresponding channel state information reference signal (CSI-RS) resource set is configured with a tracking reference signal information (trs-Info) parameter, determining that the corresponding CSI report does not occupy the CPU;

for a CSI report whose configured CSI reporting quantity includes a first parameter and which is not the first type CSI report, determining that the corresponding CSI report does not occupy the CPU; wherein the first parameter includes one or more of the following: channel state information reference signal resource indicator-reference signal received power (cri-RSRP); synchronization signal block index-reference signal received power (ssb-Index-RSRP); reference signal resource indicator-signal to interference plus noise ratio (cri-SINR); synchronization signal block index-signal to interference plus noise ratio (ssb-Index-SINR); none and the corresponding CSI-RS resource set is not configured with the trs-Info parameter;

for a CSI report whose configured CSI reporting quantity includes a second parameter and which is a first type CSI report, a number of CPUs occupied by the corresponding CSI report is determined to be related to a number of CSI-RS resources in a CSI-RS resource set configured by a network device; wherein the second parameter includes one or more of the following: cri-RSRP; ssb-Index-RSRP; cri-SINR; ssb-Index-SINR; none and a corresponding CSI-RS resource set is not configured with a trs-Info parameter;

for a CSI report whose configured CSI reporting quantity includes at least one of channel state information reference signal resource indicator-rank indicator-precoding matrix indicator-channel quality indicator (cri-RI-PMI-CQI) and channel state information reference signal resource indicator-rank indicator-layer indicator-precoding matrix indicator-channel quality indicator (cri-RI-LI-PMI-CQI), a number of CPUs occupied by the corresponding CSI report is determined to be related to a number of CSI-RS resources in a CSI-RS resource set for channel measurement;

for a CSI report satisfying a first condition and whose configured CSI reporting quantity is not one of cri-RI-PMI-CQI and cri-RI-LI-PMI-CQI, determining that the corresponding CSI report does not occupy the CPU; wherein the first condition includes one or more of the following: the CSI report does not belong to a CSI report configured by higher layer signaling that is not the first type CSI report; the CSI report does not belong to a CSI report whose configured CSI reporting quantity is none and whose corresponding CSI-RS resource set is configured with a trs-Info parameter; the CSI report does not belong to a CSI report whose configured CSI reporting quantity is a seventh parameter; wherein the seventh parameter includes one or more of the following: cri-RSRP; ssb-Index-RSRP; cri-SINR; ssb-Index-SINR; none and a corresponding CSI-RS resource set is not configured with a trs-Info parameter.

Optionally, in the computation method, in a case of reporting the second information to the network device, determining, according to a preset rule, a number of CPUs occupied by the CSI report includes one or more of the following:

for a CSI report whose configured CSI reporting quantity is none and whose corresponding CSI-RS resource set is configured with a trs-Info parameter, determining that the corresponding CSI report does not occupy the CPU;

for a CSI report whose configured CSI reporting quantity includes a third parameter and which is not the first type CSI report, determining that a number of CPUs occupied by the corresponding CSI report is 1; wherein the third parameter includes one or more of the following: cri-RSRP; ssb-Index-RSRP; cri-SINR; ssb-Index-SINR; none and a corresponding CSI-RS resource set is not configured with a trs-Info parameter;

for a CSI report whose configured CSI reporting quantity includes a fourth parameter and which is the first type CSI report, a number of CPUs occupied by the corresponding CSI report is determined to be related to a number of CSI-RS resources in a CSI-RS resource set configured by a network device; wherein the fourth parameter includes one or more of the following: cri-RSRP; ssb-Index-RSRP; cri-SINR; ssb-Index-SINR; none and a corresponding CSI-RS resource set is not configured with a trs-Info parameter.

Optionally, in the computation method, determining, according to a configuration of a network device, a number of CPUs occupied by the CSI report includes one or more of the following:

for a CSI report whose configured CSI reporting quantity includes a fifth parameter and which is the first type CSI report, determining, according to the configuration of the network device, a number of CPUs occupied by the CSI report; wherein the fifth parameter includes one or more of the following: cri-RSRP; ssb-Index-RSRP; cri-SINR; ssb-Index-SINR; none and a corresponding CSI-RS resource set is not configured with a trs-Info parameter;

for a CSI report whose configured CSI reporting quantity includes at least one of cri-RI-PMI-CQI and cri-RI-LI-PMI-CQI, determining, according to the configuration of the network device, a number of CPUs occupied by the CSI report.

Optionally, in the computation method, determining, according to a reporting capability of the terminal, a number of CPUs occupied by the CSI report includes one or more of the following:

for a CSI report whose configured CSI reporting quantity includes a sixth parameter and which is the first type CSI report, determining, according to the reporting capability of the terminal, a number of CPUs occupied by the CSI report; wherein the sixth parameter includes one or more of the following: cri-RSRP; ssb-Index-RSRP; cri-SINR; ssb-Index-SINR; none and a corresponding CSI-RS resource set is not configured with a trs-Info parameter;

for a CSI report whose configured CSI reporting quantity includes at least one of cri-RI-PMI-CQI and cri-RI-LI-PMI-CQI, determining, according to the reporting capability of the terminal, a number of CPUs occupied by the CSI report.

Optionally, in the computation method, determining, according to the reporting capability of the terminal, a number of CPUs occupied by the CSI report includes:

when the terminal reports a first capability condition, determining that a number of CPUs occupied by the CSI report is a first number;

when the terminal reports a second capability condition, determining that a number of CPUs occupied by the CSI report is a second number;

wherein the second number is greater than or equal to the first number.

Optionally, in the computation method, the method further includes:

determining, according to at least one of the following rules, an occupation time interval of the CPU occupied by a first type CSI report:

for aperiodic CSI report reporting, determining that an occupation time interval of the CPU occupied by the CSI report is: from a first symbol after a physical downlink control channel (PDCCH) that triggers the corresponding CSI report to a last symbol of a physical uplink shared channel (PUSCH) carrying the corresponding CSI report;

for a first CSI report reporting of semi-persistent CSI reporting carried on a PUSCH triggered by a PDCCH, determining that an occupation time interval of the CPU occupied by the corresponding CSI report is: from a first symbol after the PDCCH to a last symbol of the PUSCH carrying the corresponding CSI report;

for a periodic or semi-persistent CSI report other than a first CSI report of semi-persistent CSI reporting carried on a PUSCH triggered by a PDCCH, determining that an occupation time interval of the CPU occupied by the corresponding CSI report is: from a first symbol of an earliest resource among measurement signal resources for channel measurement or interference measurement to a last symbol of an uplink transmission resource carrying the corresponding CSI report.

Optionally, in the computation method, the method further includes:

determining $N_{CPU}$ - L CPUs to be unoccupied when the CSI report occupies L CPUs;

wherein,

when the terminal reports first information to a network device, $N_{CPU}$ is the value for the number of supported simultaneous first-type CSI calculations; the number $N_{CPU}$ is equal to the number of CPUs of the terminal being usable for processing first-type CSI reports; and/or

when the terminal reports second information to a network device, $N_{CPU}$ is the number of second-type CSI computations that the terminal is capable of supporting simultaneously; the number $N_{CPU}$ is equal to the number of CPUs of the terminal being usable for processing CSI reports.

Optionally, the calculation method, wherein the allocation rule of the $N_{CPU}$ - L CPUs is determined in the following manner:

according to the arrangement order of priorities of N CSI reports from high to low, M CSI reports with higher priorities among the N CSI reports are selected to occupy the $N_{CPU}$ - L CPUs; wherein M is the maximum number of CSI reports among the N CSI reports that are capable of occupying the $N_{CPU}$ - L CPUs; N is an integer greater than or equal to 0, and M is less than or equal to N.

Optionally, in the computation method, the method further includes:

for other CSI reports except the M CSI reports among the N CSI reports, the CSI reports are not required to update CSI reports.

Optionally, in the computation method, the method further includes:

according to at least one of a serving cell identity, a type of the CSI report, and a report configuration identity of the CSI report, determining a priority value of each CSI report among the N CSI reports; or, according to indication information sent by a network device, determining a priority value of each CSI report among the N CSI reports.

Optionally, in the computation method, in a case of reporting the second information to the network device, when determining a priority value of each CSI report among the N CSI reports according to at least one of a serving cell identity, a type of the CSI report, and a report configuration identity of the CSI report, the determined priority is further related to whether the corresponding CSI report is a first type CSI report.

Optionally, the calculation method, wherein in a case of reporting second information to a network device, the following formula is adopted to determine a priority value $Pri_{iCSI}(y, k, c, s, x)$ of each CSI report among the N CSI reports according to at least one of a serving cell identifier, a type of the CSI report, and a report configuration identifier of the CSI report:

$$Pri_{iCSI}(y, k, c, s, x) = 6 \cdot N_{cells} \cdot M_s \cdot x + 2 \cdot N_{cells} \cdot M_s \cdot y + N_{cells} \cdot M_s \cdot k + M_s \cdot c + s;$$

wherein x is a first value or a second value; the first value indicates that the CSI report is of a first type; the second value indicates that the CSI report is not of the first type;

y is a CSI report type indication value, and different values are taken when the types of the CSI reports are different;

z is a third value or a fourth value, the third value indicating that the CSI report carries L1-RSRP or L1-SINR, and the fourth value indicating that the CSI report does not carry L1-RSRP or L1-SINR;

c is a serving cell identity configured by higher layer signaling; Cmax is a value of a higher layer parameter maxNrofServingCells;

s is a report configuration identity reportConfigID configured by higher layer signaling; Smax is a value of a higher layer parameter maxNrofCSI-ReportConfigurations.

Optionally, in the computation method, adopting the following formula, and determining, according to at least one of a serving cell identity, a type of the CSI report, and a report configuration identity of the CSI report, a priority value of each CSI report among the N CSI reports:

$$Pri_{iCSI}(y, k, c, s, f) = 6 \cdot N_{cells} \cdot M_s \cdot f + 2 \cdot N_{cells} \cdot M_s \cdot y + N_{cells} \cdot M_s \cdot k + M_s \cdot c + s;$$

wherein f is a priority weighting factor indicated by the network device;

y is a CSI report type indication value, wherein when the type of the CSI report is different, y takes different values;

k is a third value or a fourth value; the third value indicates that the CSI report carries a Layer 1 reference signal received power L1-RSRP or a Layer 1 signal-to-interference-plus-noise ratio L1-SINR; the fourth value indicates that the CSI report does not carry the L1-RSRP or the L1-SINR;

c is a serving cell identifier configured by higher layer signaling; $N_{cells}$ is a value of a higher layer parameter maxNrofServingCells indicating a maximum number of serving cells;

s is a report configuration identifier reportConfigID configured by higher layer signaling; $M_s$ is a value of a higher layer parameter maxNrofCSI-ReportConfigurations indicating a maximum number of CSI report configurations.

In one embodiment of the present invention, a computation method of a channel state information (CSI) processing unit is further provided, wherein the method is executed by a network device, and the method includes:

receiving first information and/or second information reported by a terminal;

wherein the first information includes a number of first type CSI computations that the terminal can support simultaneously; a CSI report of the first type CSI computation is a first type CSI report;

the second information includes a number of second type CSI computations that the terminal can support simultaneously, and a CSI report of the second type CSI computation includes the first type CSI report and the second type CSI report.

Optionally, in the computation method, the method further includes:

determining, according to the first information and/or the second information reported by the terminal, a processing manner of a CSI report sent by the terminal.

In one embodiment of the present invention, a terminal is further provided, including a transceiver, wherein the transceiver is configured to:

report first information and/or second information to a network device;

wherein the first information includes a number of first type CSI computations that the terminal can support simultaneously, and a CSI report of the first type CSI computation is a first type CSI report;

the second information includes a number of second type CSI computations that the terminal can support simultaneously, and a CSI report of the second type CSI computation includes the first type CSI report and the second type CSI report.

In one embodiment of the present invention, a network device is further provided, including a transceiver, wherein the transceiver is configured to:

receive first information and/or second information reported by a terminal;
wherein the first information includes a number of first type CSI computations that the terminal can support simultaneously; a CSI report of the first type CSI computation is a first type CSI report;
the second information includes a number of second type CSI computations that the terminal can support simultaneously, and a CSI report of the second type CSI computation includes the first type CSI report and the second type CSI report.

In one embodiment of the present invention, a computation apparatus of a channel state information (CSI) processing unit is further provided, wherein the apparatus is applied to a terminal, and the apparatus includes:

a reporting module, configured to report first information and/or second information to a network device;
wherein the first information includes a number of first type CSI computations that the terminal can support simultaneously, and a CSI report of the first type CSI computation is a first type CSI report;
the second information includes a number of second type CSI computations that the terminal can support simultaneously, and a CSI report of the second type CSI computation includes the first type CSI report and the second type CSI report.

In one embodiment of the present invention, a computation apparatus of a channel state information (CSI) processing unit is further provided, wherein the apparatus is applied to a network device, and the apparatus includes:

a receiving module, configured to receive first information and/or second information reported by a terminal;
wherein the first information includes a number of first type CSI computations that the terminal can support simultaneously; a CSI report of the first type CSI computation is a first type CSI report;
the second information includes a number of second type CSI computations that the terminal can support simultaneously, and a CSI report of the second type CSI computation includes the first type CSI report and the second type CSI report.

In one embodiment of the present invention, a terminal is further provided, including: a processor, a memory, and a program stored on the memory and executable on the processor, wherein when executed by the processor, the program implements the computation method of the channel state information (CSI) processing unit according to any one of the above embodiments.

In one embodiment of the present invention, a network device is further provided, including: a processor, a memory, and a program stored on the memory and executable on the processor, wherein when executed by the processor, the program implements the computation method of the channel state information (CSI) processing unit according to any one of the above embodiments.

In one embodiment of the present invention, a computer-readable storage medium is further provided, wherein a program is stored on the computer-readable storage medium, and when executed by a processor, the program implements the steps of the computation method of the channel state information (CSI) processing unit according to any one of the above embodiments.

At least one of the technical solutions described above in the present invention has the following beneficial effects:

by adopting the method provided in the embodiments of the present invention, through reporting a number of first type CSI computations that the terminal can support simultaneously, and/or reporting a number of second type CSI computations that the terminal can support simultaneously, a processing capability of the terminal for performing different types of CSI computations is provided to a network device, so that the terminal and a network side can perform differentiated CPU processing unit computation according to the processing capability.

## BRIEF DESCRIPTION OF THE DRAWINGS

FIG. 1 shows a schematic flow chart of a computation method according to a first embodiment of the present disclosure;
FIG. 2 shows a schematic flow chart of a computation method according to a second embodiment of the present disclosure;

FIG. 3 shows a schematic structural diagram of a terminal according to an embodiment of the present disclosure;
FIG. 4 shows a schematic structural diagram of a network device according to an embodiment of the present disclosure;
FIG. 5 shows a schematic structural diagram of a computation apparatus according to a first embodiment of the present disclosure;
FIG. 6 shows a schematic structural diagram of a computation apparatus according to a second embodiment of the present disclosure.

## DETAILED DESCRIPTION

In order to make the technical problem to be solved, the technical solution, and the advantages of the present invention clearer, the following will be described in detail with reference to the accompanying drawings and specific embodiments.

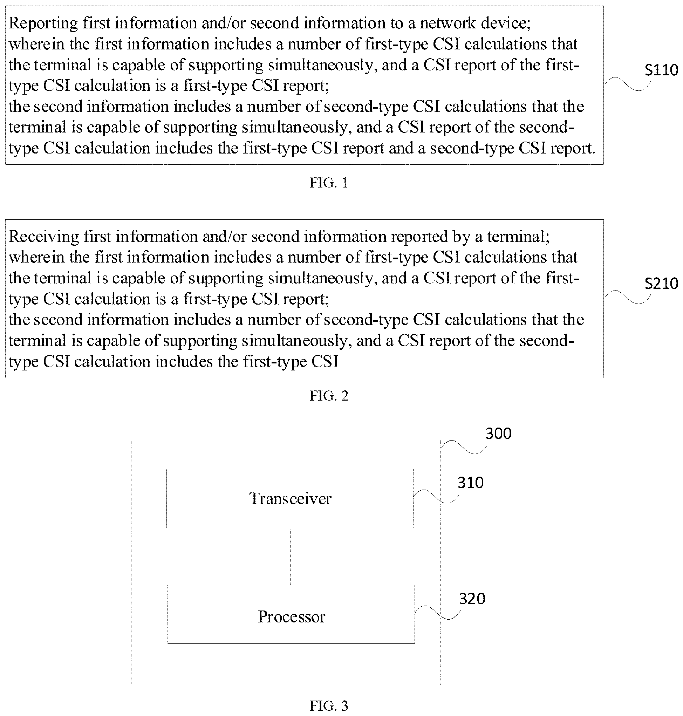

To provide a terminal with the processing capability of performing different types of CSI calculations, an embodiment of the present invention provides a calculation method of a channel state information CSI processing unit, as shown in Fig. 1, wherein in one embodiment, the calculation method is executed by the terminal and comprises:

S110, reporting first information and/or second information to network equipment;
wherein the first information comprises a number of first type CSI calculations that the terminal can simultaneously support, and a CSI report of the first type CSI calculation is a first type CSI report;
the second information comprises a number of second type CSI calculations that the terminal can simultaneously support, and a CSI report of the second type CSI calculation comprises a first type CSI report and a second type CSI report.

By adopting the calculation method of the present embodiment, the number of first type CSI calculations that the terminal can simultaneously support is reported, and/or the number of second type CSI calculations that the terminal can simultaneously support is reported, wherein different types of CSI calculations correspond to different types of CSI reports, so as to provide the processing capability of the terminal to perform different types of CSI calculations to the network equipment, thereby enabling the terminal and the network side to perform differentiated CPU processing unit calculations according to the processing capability.

Optionally, in the embodiment of the present invention, the first type CSI report is an AI-based CSI report, and the second type CSI report is a non-AI-based CSI report.

By adopting the calculation method of the present embodiment, the first information comprising the number of first type CSI calculations that the terminal can simultaneously support is reported, so that according to the first information, CPUs for the first type CSI report and the second type CSI report can be independently calculated, and/or the second information comprising the number of second type CSI calculations that the terminal can simultaneously support is reported, so that according to the second information, CPUs can be jointly calculated based on the first type CSI report and the second type CSI report. In this way, the terminal can calculate CPUs in an adaptive manner according to AI processing capability, thereby introducing a differentiated CPU calculation mechanism for AI.

Optionally, the method further comprises:
determining a number of CSI processing unit CPUs occupied by the CSI report according to a type of the CSI report configured by high-layer signaling.

Specifically, the number of CPUs occupied by the CSI report is determined according to whether the CSI report is AI-based, whether a reporting amount configured for the CSI report comprises a reference signal receiving power of channel state information reference signal resource indicator (cri-RSRP), a reference signal receiving power of synchronization signal block index (ssb-Index-RSRP), a signal-to-interference-and-noise ratio of channel state information reference signal resource indicator (cri-SINR), a signal-to-interference-and-noise ratio of synchronization signal block index (ssb-Index-SINR) and none, and whether a CSI resource set configured with the CSI report comprises tracking reference signal information (trs-Info), and the like.

Each type of CSI report configured by high-layer signaling has a respective number of CPUs occupied.

In the embodiment of the present invention, optionally, different types of CSI reports correspond to different numbers of CPUs.

Optionally, the number of CPUs occupied by the CSI report can be determined according to at least one of a preset rule, network equipment configuration, and UE capability reporting.

The following will respectively describe in detail specific embodiments in the case where the terminal reports the first information and the second information to the network equipment.

Embodiment 1

In Embodiment 1, the terminal reports first information to a network device, wherein the first information includes a maximum number $N_{CPU}$ of first-type CSI computations that the terminal is capable of supporting simultaneously; wherein the CSI report of the first-type CSI computation is a first-type CSI report, and the first-type CSI report is an AI-based CSI report.

Optionally, a maximum number $N_{CPU}$ of AI-based CSI report computations that the terminal is capable of supporting simultaneously is equal to a number of CPUs of the terminal being usable for AI-based CSI report computations.

Specifically, in a case where the terminal supports $N_{CPU}$ AI-based CSI reports being computed simultaneously, the terminal has $N_{CPU}$ CPUs available on all configured cells for use in an AI-based CSI compression module.

In one embodiment, optionally, the method further comprises:
determining a number of CSI processing unit CPUs occupied by the CSI report according to a type of the CSI report configured by high-layer signaling; wherein different types of CSI reports correspond to different numbers of CPUs.

For example, various CSI reports (n = 0, ···, N-1) configured by higher layer signaling have respective numbers of CPUs to be occupied, denoted as $O_{CPU}^{(n)}$; wherein n represents an index of different types of CSI reports.

Optionally, the method further comprises:
determining a number of CPUs occupied by the CSI report according to a preset rule, network equipment configuration, and/or terminal capability.

In one embodiment, in the case of reporting the first information to the network equipment, determining a number of CPUs occupied by the CSI report according to a preset rule comprises one or more of the following:

for CSI reports configured by higher layer signaling that are not AI-based, it is determined that reporting corresponding CSI reports does not occupy a CPU; in this embodiment, in a case where CSI reports configured by higher layer signaling are not implemented based on AI, $O_{CPU}^{(n)} = 0$ is determined;

for a CSI report used for configuring transmission of a Tracking Reference Signal (TRS), it is determined that reporting the corresponding CSI report does not occupy a CPU; in other words, for a CSI report with a reporting quantity configured as none and with a corresponding Channel State Information-Reference Signal (CSI-RS) resource set configured with a trs-Info parameter, it is determined that reporting the corresponding CSI report does not occupy a CPU. Specifically, in a case where the reporting quantity of the CSI report configuration is none and the CSI-RS resource set is configured with the trs-Info parameter, it is determined that the CSI report is used for configuring TRS transmission, the terminal does not need CSI computation or processing operation, and $O_{CPU}^{(n)} = 0$ is determined;

for a CSI report used for configuring beam management and not being AI-based, it is determined that reporting the corresponding CSI report does not occupy a CPU; in other words, for a CSI report with a reporting quantity including a first parameter and not being a first-type CSI report, it is determined that reporting the corresponding CSI report does not occupy a CPU; wherein the first parameter comprises one or more of: a channel state information reference signal resource indicator-reference signal received power (cri-RSRP); a synchronization signal block index-reference signal received power (ssb-Index-RSRP); a reference signal resource indicator-signal-to-interference-plus-noise ratio (cri-SINR); a synchronization signal block index-signal-to-interference-plus-noise ratio (ssb-Index-SINR); none, and at least one of the trs-Info parameters is not configured in a corresponding CSI-RS resource set. Specifically, in a case where the reporting quantity of the CSI report configuration is at least one of cri-RSRP, ssb-Index-RSRP, cri-SINR, ssb-Index-SINR, or none, and at least one trs-Info higher layer parameter of the CSI-RS resource set is not configured, it is determined that the CSI report is used for beam management; in a case where the CSI report is not AI-based, it is determined that the terminal does not require additional AI-based CSI computation or processing and only requires transmission of non-AI CPUs, and $O_{CPU}^{(n)} = 0$ is determined;

for a CSI report used for configuring beam management and being AI-based, it is determined that the number of CPUs occupied by reporting the corresponding CSI report is related to a number of CSI-RS resources in a CSI-RS resource set configured by a network device; in other words, for a CSI report with a reporting quantity including a second parameter and being a first-type CSI report, it is determined that the number of CPUs occupied by reporting the corresponding CSI report is related to the number of CSI-RS resources in the CSI-RS resource set configured by the network device; wherein the second parameter comprises one or more of: cri-RSRP; ssb-Index-RSRP; cri-SINR; ssb-Index-SINR; none, and a trs-Info parameter is not configured in a corresponding CSI-RS resource set. In one embodiment, in a case of a CSI report used for configuring beam management and being AI-based, it is determined that a number $O_{CPU}^{(n)}$ of CSI processing unit CPUs required by the CSI report is related to the number of CSI-RS resources in the CSI-RS resource set configured by the network device; that is, in this case, the number $O_{CPU}^{(n)}$ of CSI processing unit CPUs required by the CSI report is equal to a preset value, the preset value being related to the number of CSI-RS resources in the CSI-RS resource set used for channel measurement;

for a CSI report configured for reporting based on a Precoding Matrix Indicator (PMI), it is determined that a number of CPUs occupied by reporting the corresponding CSI report is related to a number of CSI-RS resources in a CSI-RS resource set used for channel measurement; in other words, for a CSI report with a reporting quantity including at least one of a channel state information resource indicator-rank indicator-precoding matrix indicator-channel quality indicator (cri-RI-PMI-CQI) and a channel state information resource indicator-rank indicator-layer indicator-precoding matrix indicator-channel quality indicator (cri-RI-LI-PMI-CQI), it is determined that a number of CPUs occupied by reporting the corresponding CSI report is related to the number of CSI-RS resources in the CSI-RS resource set used for channel measurement. Optionally, a CSI report configured with a reporting quantity being one of cri-RI-PMI-CQI and cri-RI-LI-PMI-CQI is a CSI report based on PMI reporting; in this embodiment, for a CSI report configured for reporting based on PMI, it is determined that a number of CPUs occupied by reporting the corresponding CSI report is related to the number of CSI-RS resources in the CSI-RS resource set used for channel measurement; that is, in this case, a number $O_{CPU}^{(n)}$ of CSI processing unit CPUs required by the CSI report is equal to a preset value, the preset value being related to the number of CSI-RS resources in the CSI-RS resource set used for channel measurement;

for a CSI report satisfying a first condition and configured not to be reported based on PMI, determining that reporting the corresponding CSI report does not occupy CPUs; in other words, for a CSI report satisfying the first condition and not configured with a reporting amount of cri-RI-PMI-CQI and cri-RI-LI-PMI-CQI, it is determined that reporting the corresponding CSI report does not occupy CPUs. Optionally, the first condition comprises one or more of the following: the CSI report does not belong to a CSI report configured by high-layer signaling and not being a first type CSI report; the CSI report does not belong to a CSI report configured with a reporting amount of none and a CSI-RS resource set configured with a trs-Info parameter; the CSI report does not belong to a CSI report configured with a reporting amount of a seventh parameter; the seventh parameter comprises one or more of the following: cri-RSRP; ssb-Index-RSRP; cri-SINR; ssb-Index-SINR; none and the trs-Info parameter is not configured in the CSI-RS resource set. In this embodiment, in a case where the CSI report does not belong to any one of a CSI report configured by high-layer signaling and not being AI-based, a CSI report configured for TRS transmission, and a CSI report configured for beam management, and is not a CSI report reported based on PMI, it is determined that reporting the corresponding CSI report does not occupy CPUs, and $O_{CPU}^{(n)} = 0$ is determined.

Optionally, in the embodiment of the present invention, in a case of reporting the first information to the network device, a number of CPUs occupied by the CSI report is determined according to the network device configuration, including one or more of the following:

for a CSI report configured with a reporting amount comprising a fifth parameter and being a first type CSI report, a number of CPUs occupied by the CSI report is determined according to the network device configuration; the fifth parameter comprises one or more of the following: cri-RSRP; ssb-Index-RSRP; cri-SINR; ssb-Index-SINR; none and the CSI-RS resource set corresponding thereto is not configured with a trs-Info parameter;
for a CSI report configured with a reporting amount comprising at least one of cri-RI-PMI-CQI and cri-RI-LI-PMI-CQI, a number of CPUs occupied by the CSI report is determined according to the network device configuration.

Optionally, in a case of reporting the first information to the network device, a number of CPUs occupied by the CSI report is determined according to the UE capability reporting, including one or more of the following:

for a CSI report configured with a reporting amount comprising a sixth parameter and being a first type CSI report, a number of CPUs occupied by the CSI report is determined according to the UE capability reporting; the sixth parameter comprises one or more of the following: cri-RSRP; ssb-Index-RSRP; cri-SINR; ssb-Index-SINR; none and the CSI-RS resource set corresponding thereto is not configured with a trs-Info parameter;
for a CSI report configured with a reporting amount comprising at least one of cri-RI-PMI-CQI and cri-RI-LI-PMI-CQI, a number of CPUs occupied by the CSI report is determined according to the UE capability reporting.

By adopting the calculation method according to the embodiment of the present invention, in one embodiment, optionally, for a CSI report used for configuring beam management and being AI-based, it is determined that a number $O_{CPU}^{(n)}$ of CPUs occupied by reporting the corresponding CSI report is a preset value, or determined through network device configuration, or determined according to reporting capability of the terminal.

In one embodiment, for a CSI report used for configuring beam management and being AI-based, it is determined that a number $O_{CPU}^{(n)}$ of CSI processing unit CPUs required by the CSI report is related to a number of CSI-RS resources in a CSI-RS resource set configured by a network device; that is, in this case, a number $O_{CPU}^{(n)}$ of CSI processing unit CPUs required by the CSI report is equal to a preset value, the preset value being related to the number of CSI-RS resources in the CSI-RS resource set used for channel measurement;

in another embodiment, for a CSI report used for configuring beam management and being AI-based, a number $O_{CPU}^{(n)}$ of CSI processing unit CPUs required by the CSI report is determined through network device configuration; by adopting this embodiment, the network device can directly configure the number $O_{CPU}^{(n)}$ for the terminal;

in another embodiment, for a CSI report used for configuring beam management and being AI-based, a number $O_{CPU}^{(n)}$ of CSI processing unit CPUs required by the CSI report is determined according to reporting capability of the terminal. Optionally, the reporting capability of the terminal comprises various capabilities, and one or more of the capabilities may be adopted to determine a number $O_{CPU}^{(n)}$ of CSI processing unit CPUs required by the CSI report. For example, when the terminal reports a first capability condition, it is determined that a number of CPUs required by the CSI report is a first number $O_1^{(n)}$; when the terminal reports a second capability condition, it is determined that a number of CPUs required by the CSI report is the first number denoted as $O_2^{(n)}$; if the second capability condition is higher than the first capability condition, then $O_2^{(n)} > O_1^{(n)}$.

In the embodiment of the present invention, in another embodiment, for a CSI report configured for reporting based on PMI, it is determined that a number $O_2^{(n)}$ of CPUs occupied by reporting the corresponding CSI report is a preset value, or determined through network device configuration, or determined according to reporting capability of the terminal.

In one embodiment, for a CSI report configured for reporting based on PMI, it is determined that a number $O_2^{(n)}$ of CSI processing unit CPUs required by the CSI report is related to a number of CSI-RS resources in a CSI-RS resource set used for channel measurement; that is, in this case, a number $O_2^{(n)}$ of CSI processing unit CPUs required by the CSI report is equal to a preset value, the preset value being related to the number of CSI-RS resources in the CSI-RS resource set used for channel measurement;

in another embodiment, for a CSI report configured for reporting based on PMI, a number $O_2^{(n)}$ of CSI processing unit CPUs required by the CSI report is determined through network device configuration; by adopting this embodiment, the network device can directly configure the number $O_2^{(n)}$ for the terminal;

in another embodiment, for a CSI report configured for reporting based on PMI, a number $O_2^{(n)}$ of CSI processing unit CPUs required by the CSI report is determined according to reporting capability of the terminal. Optionally, the reporting capability of the terminal comprises various capabilities, and one or more of the capabilities may be adopted to determine a number $O_2^{(n)}$ of CSI processing unit CPUs required by the CSI report. For example, when the terminal reports a first capability condition, it is recorded that a number of CPUs required by the CSI report is a first number $O_1^{(n)}$; when the terminal reports a second capability condition, it is determined that a number of CPUs required by the CSI report is the first number denoted as $O_2^{(n)}$; if the second capability condition is higher than the first capability condition, then $O_2^{(n)} > O_1^{(n)}$.

Optionally, in the calculation method of the embodiment of the present invention, in a case of reporting the first information to the network device, the method further comprises:

in a case where the terminal occupies L CPUs for AI-based (first type) CSI reports, determining an occupation time interval of CPUs occupied by AI-based CSI reports according to at least one of the following rules:

for non-periodic CSI reporting, determining the occupation time interval of CPUs occupied by the CSI report as: from a first symbol after a physical downlink control channel (PDCCH) triggering the corresponding CSI report to a last symbol of a physical uplink shared channel (PUSCH) carrying the corresponding CSI report;

for a first CSI report of semi-persistent CSI reporting borne on a PUSCH triggered by the PDCCH, determining the occupation time interval of CPUs occupied by the corresponding CSI report as: from a first symbol after the PDCCH to a last symbol of the PUSCH carrying the corresponding CSI report;

for periodic or semi-persistent CSI reporting, except for a first CSI report of semi-persistent CSI reporting borne on a PUSCH triggered by the PDCCH, determining the occupation time interval of CPUs occupied by the corresponding CSI report as: from a first symbol of an earliest one of measurement signal resources for channel measurement or interference measurement to a last symbol of uplink transmission resources bearing the corresponding CSI reporting.

Optionally, in the embodiment, each latest transmission timing of respective measurement signal resources for channel measurement or interference measurement should not be later than a transmission time of a corresponding CSI reference resource.

Optionally, measurement signal resources comprise one or more of CSI-RS, CSI-IM and SSB resources; uplink transmission resources comprise at least one of PUSCH and PUCCH.

In another embodiment, optionally, the calculation method further comprises: in a case where L CPUs are occupied by CSI reports, determining $N_{CPU}$ - L CPUs as being unoccupied; wherein $N_{CPU}$ is a maximum number of AI-based (first-type) CSI computations that the terminal is capable of processing simultaneously, the maximum number $N_{CPU}$ being equal to a number of CPUs of the terminal usable for processing AI-based (first-type) CSI reports.

Specifically, in a case where the terminal occupies L CPUs for computations based on CSI reports, a remaining $N_{CPU}$ - L CPUs are reserved as being unoccupied.

Optionally, in the embodiment of the present invention, the following manner is adopted to determine an allocation rule of the $N_{CPU}$ - L CPUs:

according to an arrangement order of priorities of N CSI reports from high to low, M CSI reports with higher priorities among the N CSI reports are selected to occupy the $N_{CPU}$ - L CPUs; wherein M is a maximum number of CSI reports among the N CSI reports that are capable of occupying the $N_{CPU}$ - L CPUs; N is an integer greater than or equal to 0, and M is less than or equal to N.

By way of example, assuming that N CSI reports start to occupy the remaining $N_{CPU}$ - L CPUs, wherein a number of CPUs corresponding to each CSI report n = 0, $\cdots$, N-1 is denoted as $O_{CPU}^{(n)}$, then an allocation rule of the CPUs is as follows:

setting M as a maximum value such that $\sum_{n=0}^{M-1} O_{CPU}^{(n)} \leq N_{CPU} - L$ and satisfies $0 \leq M \leq N$.

Specifically, among N CSI reports arranged in order of priority from high to low, a sum of $O_{CPU}^{(n)}$ respectively corresponding to the 0th CSI report to the (M-1)th CSI report is less than or equal to $N_{CPU}$ - L, and M is a maximum value satisfying the condition.

Optionally, the method further comprises:

for the other CSI reports among the N CSI reports except the M CSI reports, not requiring to update CSI reports.

By adopting this embodiment, the M CSI reports with higher priority need to perform measurement processing and report updated CSI reports; the N-M CSI reports with lower priority do not need to perform measurement processing and updating.

In the embodiment of the present invention, optionally, the method further comprises:

determining a priority value of each CSI report among the N CSI reports according to at least one of a serving cell identifier, a type of the CSI report, and a report configuration identifier of the CSI report; or determining a priority value of each CSI report among the N CSI reports according to indication information sent by the network device.

Optionally, the method further comprises:

determining an arrangement order of the N CSI reports from high to low in priority according to the priority value of each CSI report among the N CSI reports.

In one embodiment, the priority value of each CSI report among the N CSI reports can be determined according to indication information sent by the network device; for example, the network device can indicate the priority value of the CSI report to the terminal by sending at least one of RRC, MAC CE, or DCI signaling.

In another embodiment, the priority value of the CSI report can be calculated according to preset rules, and is related to information such as a serving cell identifier, a type of the CSI report, and a report configuration identifier of the CSI report.

Optionally, the type of the CSI report comprises one or more of periodic reporting, aperiodic reporting, semi-persistent reporting borne on a PUCCH, and semi-persistent reporting borne on a PUSCH.

In one embodiment, optionally, a priority value $Pri_{iCSI}(y, k, c, s, x)$ of a CSI report may be calculated and determined by Formula I as follows:

$$\text{formula I:} \; Pri_{iCSI}(y, k, c, s) = 2 \cdot N_{cells} \cdot M_s \cdot y + N_{cells} \cdot M_s \cdot k + M_s \cdot c + s \; ;$$

wherein s represents a report configuration identifier reportConfigID configured by higher layer signaling, and $M_s$ represents a value of a higher layer parameter maxNrofCSI-ReportConfigurations indicating a maximum number of CSI report configurations;

c represents a serving cell identifier or index serving cell index configured by higher layer signaling, and $N_{cells}$ is a value of a higher layer parameter maxNrofServingCells indicating a maximum number of serving cells;

k and y respectively represent preset values determined according to a type of the CSI report, wherein:

for a CSI report carrying a layer 1 reference signal receiving power (L1-RSRP) or a layer 1 signal-to-interference-plus-noise ratio (L1-SINR), k = 0; for a CSI report not carrying L1-RSRP or L1-SINR, k = 1;
for an aperiodic CSI report borne on a PUSCH, y = 0; for a semi-persistent CSI report borne on a PUSCH, y = 1 ; for a semi-persistent CSI report borne on a PUCCH, y = 2; for a periodic CSI report borne on a PUCCH, y = 3.

By adopting the formula I to determine the priority value of the CSI report, if a CSI report #1 calculated according to the formula is less than a CSI report #2, it can be determined that the priority of the CSI report #1 is higher than that of the CSI report #2.

Therefore, by adopting the above method of determining the priority value of the CSI report, the N CSI reports can be sorted in priority.

It should be noted that the method for determining the priority value of the CSI report described above is merely an example, and is not limited thereto.

In the calculation method of a CSI processing unit according to the embodiment of the present invention, in the above embodiment, the terminal reports first information to a network device, the first information including a number $N_{CPU}$ of first-type CSI computations that the terminal is capable of supporting simultaneously, so as to implement independent AI-based CPU computation. In this manner, considering that AI-based CSI computation generally utilizes an independent AI-dedicated chip to assist in accelerating AI inference and training, the UE, by reporting CPU capability independent of traditional non-AI CSI, can achieve more flexible CPU allocation and can customize specific CPU occupation rules for AI-based CSI.

Embodiment 2

In Embodiment 2, the terminal reports the second information to the network device, wherein the second information comprises a maximum number of second type CSI calculations that the terminal can simultaneously support, and a CSI report of the second type CSI calculation comprises an AI-based (first type) CSI report and a non-AI-based (second type) CSI report.

Optionally, a maximum number $N_{CPU}$ of CSI reports that the terminal is capable of processing simultaneously is equal to a number of CPUs of the terminal usable for CSI report processing.

Specifically, in a case where the terminal supports $N_{CPU}$ CSIs being computed simultaneously, the terminal has $N_{CPU}$ CPUs available on all configured cells for computing CSI reports.

In one embodiment, optionally, the method further comprises:
determining a number of CSI processing unit CPUs occupied by the CSI report according to a type of the CSI report configured by high-layer signaling; wherein different types of CSI reports correspond to different numbers of CPUs.

For example, various CSI reports (n = 0, ···, N-1) configured by higher layer signaling have respective numbers of CPUs to be occupied, denoted as $O_{CPU}^{(n)}$ ; wherein n represents an index of different types of CSI reports.

Optionally, the method further comprises:
determining a number of CPUs occupied by the CSI report according to a preset rule, network device configuration, and/or terminal capability.

By adopting this embodiment, different manners are employed for determining the number of CPUs occupied by AI-based CSI reports and non-AI-based CSI reports.

Specifically, a number $O_{CPU}^{(n)}$ of CSI processing unit CPUs required by the CSI report may be determined according to a preset rule, a network device configuration, and/or a terminal capability.

In one embodiment, in a case of reporting the second information to the network device, optionally, a number of CPUs occupied by the CSI report is determined according to preset rules, including one or more of the following:

For a CSI report configured for tracking reference signal (TRS) transmission, it is determined that reporting the corresponding CSI report does not occupy CPUs; in other words, for a CSI report configured with a reporting amount of "none " and a CSI-RS resource set configured with a trs-Info parameter, it is determined that reporting the corresponding CSI report does not occupy CPUs; wherein, when the reporting amount configured for the CSI report is "none" and the CSI-RS resource set is configured with trs-Info, it is determined that the CSI report is used for configuring TRS transmission, the terminal does not need CSI calculation or processing operations, and $O_{CPU}^{(n)} = 0$ is determined;

For a CSI report configured for beam management and not being AI-based, it is determined that a number of CPUs occupied by reporting the corresponding CSI report is 1; in other words, for a CSI report configured with a reporting amount comprising a third parameter and not being a first type CSI report, it is determined that a number of CPUs occupied by reporting the corresponding CSI report is 1; the third parameter comprises one or more of the following: cri-RSRP; ssb-Index-RSRP; cri-SINR; ssb-Index-SINR; none and the CSI-RS resource set corresponding thereto is not configured with a trs-Info parameter; wherein, in a case where the reporting amount configured for the CSI report is one of cri-RSRP, ssb-Index-RSRP, cri-SINR, ssb-Index-SINR, or none and the CSI-RS resource set is not configured with the trs-Info high-layer parameter, it is determined that the CSI report is used for beam management, and in a case where the CSI report is not AI-based, it is determined that the terminal does not need additional AI-based CSI calculation or processing capability and only requires traditional non-AI CPUs, and $O_{CPU}^{(n)} = 1$ is determined;

For a CSI report configured for beam management and being AI-based, it is determined that a number of CPUs occupied by reporting the corresponding CSI report is related to a number of CSI-RS resources in a CSI-RS resource set configured by the network device; in other words, for a CSI report configured with a reporting amount comprising a fourth parameter and being a first type CSI report, it is determined that a number of CPUs occupied by reporting the corresponding CSI report is related to the number of CSI-RS resources in the CSI-RS resource set configured by the network device; the fourth parameter comprises one or more of the following: cri-RSRP; ssb-Index-RSRP; cri-SINR; ssb-Index-SINR; none and the CSI-RS resource set corresponding thereto is not configured with a trs-Info parameter. In one embodiment, in a case of a CSI report used for configuring beam management and being AI-based, it is determined that a number $O_{CPU}^{(n)}$ of CSI processing unit CPUs required by the CSI report is related to a number of CSI-RS resources in a CSI-RS resource set configured by a network device; that is, in this case, a number $O_{CPU}^{(n)}$ of CSI processing unit CPUs required by the CSI report is equal to a preset value, the preset value being related to the number of CSI-RS resources in the CSI-RS resource set used for channel measurement.

In this embodiment, optionally, the number of CPUs occupied by the CSI report is determined according to the network device configuration, including one or more of the following:

For a CSI report configured with a reporting amount comprising a fifth parameter and being a first type CSI report, a number of CPUs occupied by the CSI report is determined according to the network device configuration; the fifth parameter comprises one or more of the following: cri-RSRP; ssb-Index-RSRP; cri-SINR; ssb-Index-SINR; none and the CSI-RS resource set corresponding thereto is not configured with a trs-Info parameter;

For a CSI report configured with a reporting amount comprising at least one of cri-RI-PMI-CQI and cri-RI-LI-PMI-CQI, a number of CPUs occupied by the CSI report is determined according to the network device configuration.

In this embodiment, optionally, the number of CPUs occupied by the CSI report is determined according to the UE capability reporting, including one or more of the following:

For a CSI report configured with a reporting amount comprising a sixth parameter and being a first type CSI report, a number of CPUs occupied by the CSI report is determined according to the UE capability reporting; the sixth parameter comprises one or more of the following: cri-RSRP; ssb-Index-RSRP; cri-SINR; ssb-Index-SINR; none and the CSI-RS resource set corresponding thereto is not configured with a trs-Info parameter;

For a CSI report configured with a reporting amount comprising at least one of cri-RI-PMI-CQI and cri-RI-LI-PMI-CQI, a number of CPUs occupied by the CSI report is determined according to the UE capability reporting.

By adopting the calculation method according to the embodiment of the present invention, in one embodiment, optionally, for a CSI report used for configuring beam management and being AI-based, it is determined that a number $O_{CPU}^{(n)}$ of CPUs occupied by reporting the corresponding CSI report is a preset value, or determined through network device configuration, or determined according to reporting capability of the terminal.

In one embodiment, for a CSI report used for configuring beam management and being AI-based, it is determined that a number $O_{CPU}^{(n)}$ of CSI processing unit CPUs required by the CSI report is related to a number of CSI-RS resources in a CSI-RS resource set configured by a network device; that is, in this case, a number $O_{CPU}^{(n)}$ of CSI processing unit CPUs required by the CSI report is equal to a preset value, the preset value being related to the number of CSI-RS resources in the CSI-RS resource set used for channel measurement.

In another embodiment, for a CSI report used for configuring beam management and being AI-based, a number $O_{CPU}^{(n)}$ of CSI processing unit CPUs required by the CSI report is determined through network device configuration; by adopting this embodiment, the network device can directly configure the number $O_{CPU}^{(n)}$ for the terminal.

In another embodiment, for a CSI report used for configuring beam management and being AI-based, a number $O_{CPU}^{(n)}$ of CSI processing unit CPUs required by the CSI report is determined according to reporting capability of the terminal. Optionally, the reporting capability of the terminal comprises various capabilities, and one or more of the capabilities may be adopted to determine a number $O_{CPU}^{(n)}$ of CSI processing unit CPUs required by the CSI report. For example, when the terminal reports a first capability condition, it is recorded that a number of CPUs required by the CSI report is a first number $O_1^{(n)}$; when the terminal reports a second capability condition, it is determined that a number of CPUs required by the CSI report is the first number denoted as $O_2^{(n)}$; if the second capability condition is higher than the first capability condition, then $O_2^{(n)} > O_1^{(n)}$.

Optionally, in the calculation method of the embodiment of the present invention, in a case of reporting the second information to the network device, the method further comprises:

in a case where the terminal occupies L CPUs for AI-based CSI reports, determining an occupation time interval of CPUs occupied by AI-based CSI reports according to at least one of the following rules:

For aperiodic CSI reporting, determining the occupation time interval of CPUs occupied by the CSI report as: from a first symbol after a physical downlink control channel (PDCCH) triggering the corresponding CSI report to a last symbol of a physical uplink shared channel (PUSCH) carrying the corresponding CSI report;

for a first CSI report of semi-persistent CSI reporting borne on a PUSCH triggered by the PDCCH, determining the occupation time interval of CPUs occupied by the corresponding CSI report as: from a first symbol after the PDCCH to a last symbol of the PUSCH carrying the corresponding CSI report;

for periodic or semi-persistent CSI reporting, except for a first CSI report of semi-persistent CSI reporting borne on a PUSCH triggered by the PDCCH, determining the occupation time interval of CPUs occupied by the corresponding CSI report as: from a first symbol of an earliest one of measurement signal resources for channel measurement or interference measurement to a last symbol of uplink transmission resources bearing the corresponding CSI reporting.

Optionally, in this embodiment, each latest transmission timing of respective measurement signal resources for channel measurement or interference measurement should not be later than a transmission time of a corresponding CSI reference resource.

Optionally, measurement signal resources comprise one or more of CSI-RS, CSI-IM and SSB resources; uplink transmission resources comprise at least one of PUSCH and PUCCH.

In another embodiment, optionally, the calculation method further comprises: in a case where L CPUs are occupied by CSI reports, determining $N_{CPU}$ - L CPUs as being unoccupied; wherein $N_{CPU}$ is a maximum number of second-type CSI computations that the terminal is capable of processing simultaneously, the maximum number $N_{CPU}$ being equal to a number of CPUs of the terminal usable for CSI computation processing.

Specifically, in a case where the terminal occupies L CPUs for computations based on CSI reports, a remaining $N_{CPU}$ - L CPUs are reserved as being unoccupied.

Optionally, in the embodiment of the present invention, the following manner is adopted to determine an allocation rule of the $N_{CPU}$ - L CPUs:

according to an arrangement order of priorities of N CSI reports from high to low, M CSI reports with higher priorities among the N CSI reports are selected to occupy the $N_{CPU}$ - L CPUs; wherein M is a maximum number of CSI reports among the N CSI reports that are capable of occupying the $N_{CPU}$ - L CPUs; N is an integer greater than or equal to 0, and M is less than or equal to N.

For illustration, assuming that N CSI reports start to occupy the remaining $N_{CPU}$ - L CPUs, wherein each CSI report n = 0,···,N-1 corresponds to a CPU number denoted as $O_{CPU}^{(n)}$, then the CPU distribution rule is as follows:

setting M as a maximum value such that $\sum_{n=0}^{M-1} O_{CPU}^{(n)} \leq N_{CPU} - L$ and satisfies $0 \leq M \leq N$.

Specifically, among N CSI reports arranged in order of priority from high to low, a sum of $O_{CPU}^{(n)}$ respectively corresponding to the 0th CSI report to the (M-1)th CSI report is less than or equal to $N_{CPU}$ - L, and M is a maximum value satisfying the condition.

Optionally, the method further comprises:

for the other CSI reports among the N CSI reports except the M CSI reports, not requiring to update CSI reports.

By adopting this embodiment, the M CSI reports with higher priority need to perform measurement processing and report updated CSI reports; the N-M CSI reports with lower priority do not need to perform measurement processing and updating.

By adopting this embodiment, the N-M CSI reports with lower priority do not need to be updated by the UE, while the UE needs to update the remaining M CSI reports.

Optionally, if the M CSI reports do not comprise AI-based CSI, the base station can disable a CSI recovery module corresponding to the M CSI reports.

In the embodiment of the present invention, optionally, the method further comprises:

determining a priority value of each CSI report among the N CSI reports according to at least one of a serving cell identifier, a type of the CSI report, and a report configuration identifier of the CSI report; or determining a priority value of each CSI report among the N CSI reports according to indication information sent by the network device.

Optionally, the method further comprises:

determining an arrangement order of the N CSI reports from high to low in priority according to the priority value of each CSI report among the N CSI reports.

In one embodiment, the priority value of each CSI report among the N CSI reports can be determined according to indication information sent by the network device; for example, the network device can indicate the priority value of the CSI report to the terminal by sending at least one of RRC, MAC CE, or DCI signaling.

In another embodiment, the priority value of the CSI report can be calculated according to preset rules, and is related to information such as a serving cell identifier, a type of the CSI report, and a report configuration identifier of the CSI report.

Optionally, the type of the CSI report comprises one or more of periodic reporting, aperiodic reporting, semi-persistent reporting borne on a PUCCH, and semi-persistent reporting borne on a PUSCH.

Optionally, in determining a priority value of each CSI report among the N CSI reports according to at least one of a serving cell identifier, a type of the CSI report, and a report configuration identifier of the CSI report, the determined priority is further related to whether the corresponding CSI report is an AI-based CSI report.

In one embodiment, in order to improve priority of AI-based CSI and ensure that it has a higher opportunity to occupy CPUs, Formula II is adopted to determine a priority value $Pri_{iCSI}(y, k, c, s, x)$ of each CSI report among the N CSI reports according to at least one of a serving cell identifier, a type of the CSI report, and a report configuration identifier of the CSI report:

$Pri_{iCSI}(y, k, c, s, x) = 6 \cdot N_{cells} \cdot M_s \cdot x + 2 \cdot N_{cells} \cdot M_s \cdot y + N_{cells} \cdot M_s \cdot k + M_s \cdot c + s;$         Formula II:

wherein x is a first value or a second value, the first value indicating that the CSI report is AI-based, and the second value indicating that the CSI report is not AI-based; optionally, the first value is 0 and the second value is 1; wherein, for an AI-based CSI report, x = 0; and for a non-AI-based CSI report, x = 1;

y represents a CSI report type indication value, wherein different types of CSI reports correspond to different values of y; optionally, for an aperiodic CSI report borne on a PUSCH, y = 0; for a semi-persistent CSI report borne on a PUSCH, y = 1; for a semi-persistent CSI report borne on a PUCCH, y = 2; for a periodic CSI report borne on a PUCCH, y = 3;

k represents a third value or a fourth value, the third value represents that the CSI report carries L1-RSRP or L1-SINR; the fourth value represents that the CSI report does not carry L1-RSRP or L1-SINR; optionally, the third value is 0 and the fourth value is 1; specifically, for CSI reports carrying L1-RSRP or L1-SINR, k = 0; for CSI reports not carrying L1-RSRP or L1-SINR, k = 1;

c represents a serving cell identifier configured by high-layer signaling; $N_{cells}$ represents a value of a high-layer parameter maxNrofServingCells;

s represents a report configuration identifier reportConfigID configured by high-layer signaling; $M_s$ represents a value of a high-layer parameter maxNrofCSI-ReportConfigurations.

By adopting this embodiment, if a CSI report #1 calculated according to the above formula is less than a CSI report #2, it is determined that a priority of the CSI report #1 is higher than that of the CSI report #2, wherein $Pri_{iCSI}(y, k, c, s, x)$#1 is used for CSI report #1 and $Pri_{iCSI}(y, k, c, s, x)$#2 is used for CSI report #2.

In another embodiment, the network device flexibly controls a priority value corresponding to a CSI report by indicating a value of one factor in a priority calculation formula of the CSI report. In this embodiment, optionally, Formula III is adopted to determine a priority value $Pri_{iCSI}(y, k, c, s, f)$ of each CSI report among the N CSI reports according to at least one of a serving cell identifier, a type of the CSI report, and a report configuration identifier of the CSI report:

$$Pri_{iCSI}(y, k, c, s, f) = 6 \cdot N_{cells} \cdot M_s \cdot f + 2 \cdot N_{cells} \cdot M_s \cdot y + N_{cells} \cdot M_s \cdot k + M_s \cdot c + s \qquad \text{Formula III:}$$

wherein f represents a priority weighting factor indicated by the network device;

y represents a CSI report type indication value, wherein different types of CSI reports correspond to different values of y;

k represents a third value or a fourth value, the third value represents that the CSI report carries L1-RSRP or L1-SINR; the fourth value represents that the CSI report does not carry L1-RSRP or L1-SINR;

c represents a serving cell identifier configured by high-layer signaling; $N_{cells}$ represents a value of a high-layer parameter maxNrofServingCells;

s represents a report configuration identifier reportConfigID configured by high-layer signaling; $M_s$ represents a value of a high-layer parameter maxNrofCSI-ReportConfigurations.

Optionally, the network device can send the priority weighting factor f to the terminal through at least one of RRC, MAC CE, and DCI indication; optionally, the priority weighting factor f may be related to whether the corresponding CSI report is AI-based.

It should be noted that meanings and values of other parameters in Formula III are the same as meanings and values of corresponding parameters in Formula II, and are not described repeatedly herein.

It should be noted that the method for determining a priority value of the CSI report described above is merely an example, and is not limited thereto.

In the calculation method of the CSI processing unit according to the embodiment of the present invention, in the above embodiments, the terminal reports the second information to the network device, wherein the second information comprises a number of second type CSI calculations that the terminal can simultaneously support, and the second type CSI calculation comprises an AI-based CSI report and a non-AI-based CSI report, thereby realizing joint CPU calculation of AI-based CSI reports and non-AI-based CSI reports. By adopting this manner, considering that AI-based CSI calculation and non-AI-based CSI calculation share one set of general-purpose chips, AI-based and non-AI-based CSI calculations share one set of CPU capability. Meanwhile, in designing a CSI priority calculation method, whether the CSI calculation is AI-based or non-AI-based is considered as a factor introduced into the priority calculation formula. Thus, by means of the CSI priority calculation formula, natural control of CPU occupation of AI-based or non-AI-based CSI as well as corresponding CSI update conditions can be realized. In this way, AI-based and non-AI-based CSI reports are maintained in one CPU calculation framework, thereby reducing complexity of CSI calculation of the base station and UE, while also minimizing modifications to the current standard protocol.

In another embodiment of the present invention, a calculation method of a channel state information CSI processing unit is further provided, executed by a network device, as shown in Fig. 2, and the method comprises:

S210, receiving first information and/or second information reported by a terminal;

wherein the first information comprises a number of first type CSI calculations that the terminal can simultaneously support; the CSI report of the first type CSI calculation is a first type CSI report;

the second information comprises a number of second type CSI calculations that the terminal can simultaneously support, and the CSI report of the second type CSI calculation comprises the first type CSI report and a second type CSI report.

Optionally, in the calculation method, the method further comprises:

determining a processing manner of the CSI report transmitted by the terminal according to the first information and/or the second information reported by the terminal.

In one embodiment of the present invention, a terminal is further provided, as shown in Fig. 3, the terminal 300 comprising a transceiver 310 and a processor 320, wherein the transceiver 310 is configured to:

report first information and/or second information to a network device;
wherein the first information comprises a number of first type CSI calculations that the terminal can simultaneously support, and the CSI report of the first type CSI calculation is a first type CSI report;
the second information comprises a number of second type CSI calculations that the terminal can simultaneously support, and the CSI report of the second type CSI calculation comprises the first type CSI report and the second type CSI report.

Optionally, in the terminal, the processor 320 is configured to:
determine a number of CPUs of a CSI processing unit required to be occupied by the CSI report according to a type of the CSI report configured by high-layer signaling.

Optionally, in the terminal, the processor 320 is configured to:
determine a number of CPUs occupied by the CSI report according to at least one of preset rules, network device configuration, and UE capability reporting.

Optionally, in the terminal, in a case of reporting the first information to the network device, the processor 320 determines a number of CPUs occupied by the CSI report according to preset rules, comprising one or more of:

determining that a CSI report corresponding to high-layer signaling configuration of a non-first type CSI report does not occupy a CPU;
determining that a CSI report in which a CSI reporting quantity is configured as none and a corresponding CSI-RS resource set is configured with a trs-Info parameter does not occupy a CPU;
determining that a CSI report in which a CSI reporting quantity comprises a first parameter and is not a first type CSI report does not occupy a CPU; the first parameter comprises one or more of: channel state information reference signal resource indicator-reference signal receiving power (cri-RSRP); synchronization signal block index-reference signal receiving power (ssb-Index-RSRP); channel state information reference signal resource indicator-signal to interference plus noise ratio (cri-SINR); synchronization signal block index-signal to interference plus noise ratio (ssb-Index-SINR); none and a corresponding CSI-RS resource set is not configured with a trs-Info parameter;
determining that a CSI report in which a CSI reporting quantity comprises a second parameter and is a first type CSI report occupies a number of CPUs related to a number of CSI-RS resources in a CSI-RS resource set configured by a network device; the second parameter comprises one or more of: cri-RSRP; ssb-Index-RSRP; cri-SINR; ssb-Index-SINR; none and a corresponding CSI-RS resource set is not configured with a trs-Info parameter;
determining that a CSI report in which a CSI reporting quantity comprises at least one of channel state information reference signal resource indicator-rank indicator-precoding matrix indicator-channel quality indicator (cri-RI-PMI-CQI) and channel state information reference signal resource indicator-rank indicator-layer indicator-precoding matrix indicator-channel quality indicator (cri-RI-LI-PMI-CQI) occupies a number of CPUs related to a number of CSI-RS resources in a CSI-RS resource set for channel measurement;
determining that a CSI report satisfying a first condition and in which a CSI reporting quantity is not cri-RI-PMI-CQI or cri-RI-LI-PMI-CQI does not occupy a CPU; the first condition comprises one or more of: the CSI report not belonging to a non-first type CSI report configured by high-layer signaling; the CSI report not belonging to a CSI report in which a CSI reporting quantity is none and a corresponding CSI-RS resource set is configured with a trs-Info parameter; the CSI report not belonging to a CSI report in which a CSI reporting quantity is a seventh parameter; the seventh parameter comprises one or more of: cri-RSRP; ssb-Index-RSRP; cri-SINR; ssb-Index-SINR; none and a corresponding CSI-RS resource set is not configured with a trs-Info parameter.

Optionally, in the terminal, in a case of reporting the second information to the network device, the processor 320 determines a number of CPUs occupied by the CSI report according to preset rules, comprising one or more of:

determining that a CSI report in which a CSI reporting quantity is none and a corresponding CSI-RS resource set is configured with a trs-Info parameter does not occupy a CPU; determining that a CSI report in which a CSI reporting quantity comprises a third parameter and is not a first type CSI report occupies one CPU; the third parameter comprises one or more of: cri-RSRP; ssb-Index-RSRP; cri-SINR; ssb-Index-SINR; none and a corresponding CSI-RS resource set is not configured with a trs-Info parameter;
determining that a CSI report in which a CSI reporting quantity comprises a fourth parameter and is a first type CSI report occupies a number of CPUs related to a number of CSI-RS resources in a CSI-RS resource set configured by a network device; the fourth parameter comprises one or more of: cri-RSRP; ssb-Index-RSRP; cri-SINR; ssb-Index-SINR; none and a corresponding CSI-RS resource set is not configured with a trs-Info parameter.

Optionally, in the terminal, the processor 320 determines a number of CPUs occupied by the CSI report according to network device configuration, comprising one or more of:

determining a number of CPUs occupied by a CSI report in which a CSI reporting quantity comprises a fifth parameter and is a first type CSI report according to network device configuration; the fifth parameter comprises one or more of: cri-RSRP; ssb-Index-RSRP; cri-SINR; ssb-Index-SINR; none and a corresponding CSI-RS resource set is not configured with a trs-Info parameter;

determining a number of CPUs occupied by a CSI report in which a CSI reporting quantity comprises at least one of cri-RI-PMI-CQI and cri-RI-LI-PMI-CQI according to network device configuration.

Optionally, in the terminal, the processor 320 determines a number of CPUs occupied by the CSI report according to UE capability reporting, comprising one or more of:

determining a number of CPUs occupied by a CSI report in which a CSI reporting quantity comprises a sixth parameter and is a first type CSI report according to UE capability reporting; the sixth parameter comprises one or more of: cri-RSRP; ssb-Index-RSRP; cri-SINR; ssb-Index-SINR; none and a corresponding CSI-RS resource set is not configured with a trs-Info parameter;

determining a number of CPUs occupied by a CSI report in which a CSI reporting quantity comprises at least one of cri-RI-PMI-CQI and cri-RI-LI-PMI-CQI according to UE capability reporting.

Optionally, in the terminal, the processor 320 determines a number of CPUs occupied by the CSI report according to UE capability reporting, comprising:

in a case where the terminal reports a first capability condition, determining that a number of CPUs occupied by the CSI report is a first number;

in a case where the terminal reports a second capability condition, determining that a number of CPUs occupied by the CSI report is a second number;

wherein the second number is greater than or equal to the first number.

Optionally, in the terminal, the processor 320 is further configured to:
determine an occupation time interval of CPUs occupied by first type CSI reports by adopting at least one of the following rules:

for aperiodic CSI reporting, determining the occupation time interval of CPUs occupied by the CSI report as: from a first symbol after a physical downlink control channel (PDCCH) triggering the corresponding CSI report to a last symbol of a physical uplink shared channel (PUSCH) carrying the corresponding CSI report;

for first CSI reporting of semi-persistent CSI reporting borne on a PUSCH triggered by a PDCCH, determining the occupation time interval of CPUs occupied by the corresponding CSI report as: from a first symbol after the PDCCH to a last symbol of the PUSCH carrying the corresponding CSI report;

for periodic or semi-persistent CSI reporting other than first CSI reporting of semi-persistent CSI reporting borne on a PUSCH triggered by a PDCCH, determining the occupation time interval of CPUs occupied by the corresponding CSI report as: from a first symbol of an earliest one of measurement signal resources for channel measurement or interference measurement to a last symbol of an uplink transmission resource carrying the corresponding CSI report.

Optionally, in the terminal, the processor 320 is further configured to:

determining $N_{CPU}$ - L CPUs not occupied in a case where L CPUs are occupied by CSI reports;

wherein, when the terminal reports first information to a network device, $N_{CPU}$ is a value for the number of supported simultaneous first-type CSI calculations, the number $N_{CPU}$ being equal to a number of CPUs of the terminal usable for processing first-type CSI reports; and/or, when the terminal reports second information to the network device, $N_{CPU}$ is a number of second-type CSI computations that the terminal is capable of supporting simultaneously, the number $N_{CPU}$ being equal to a number of CPUs of the terminal usable for CSI report processing.

Optionally, in the terminal, the processor 320 determines a distribution rule of the $N_{CPU}$ - L CPUs by adopting the following manner:
according to an arrangement order of N CSI reports from high to low in priority, selecting M CSI reports among the N CSI reports with priorities ranked in the front to occupy the $N_{CPU}$ - L CPUs, wherein M is a maximum number of CSI reports among the N CSI reports that can occupy the $N_{CPU}$ - L CPUs; N is an integer greater than or equal to 0, and M is less than or equal to N.

Optionally, in the terminal, the processor 320 is further configured to:

not require other CSI reports among the N CSI reports except the M CSI reports to update CSI reports.

Optionally, in the terminal, the processor 320 is further configured to:

determine a priority value of each CSI report among the N CSI reports according to at least one of a serving cell identifier, a type of the CSI report, and a report configuration identifier of the CSI report; or determine a priority value of each CSI report among the N CSI reports according to indication information sent by a network device.

Optionally, in the terminal, in a case of reporting the second information to the network device, when the processor 320 determines a priority value of each CSI report among the N CSI reports according to at least one of a serving cell identifier, a type of the CSI report, and a report configuration identifier of the CSI report, the determined priority is further related to whether the corresponding CSI report is a first type CSI report.

Optionally, the terminal, wherein in a case of reporting second information to a network device, processor 320 determines a priority value $Pri_{iCSI}(y, k, c, s, x)$ of each CSI report among the N CSI reports according to at least one of a serving cell identifier, a type of the CSI report, and a report configuration identifier of the CSI report by using the following formula:

$$Pri_{iCSI}(y, k, c, s, x) = 6 \cdot N_{cells} \cdot M_s \cdot x + 2 \cdot N_{cells} \cdot M_s \cdot y + N_{cells} \cdot M_s \cdot k + M_s \cdot c + s;$$

Wherein x is a first value or a second value, the first value representing that the CSI report is of the first type; the second value representing that the CSI report is not of the first type;

y represents a CSI report type indication value, wherein different types of CSI reports correspond to different values of y;

k represents a third value or a fourth value, the third value representing that the CSI report carries L1-RSRP or L1-SINR; the fourth value representing that the CSI report does not carry L1-RSRP or L1-SINR;

c represents a serving cell identifier configured by high-layer signaling; $N_{cells}$ represents a value of a high-layer parameter maxNrofServingCells;

s represents a report configuration identifier reportConfigID configured by high-layer signaling; $M_s$ represents a value of a high-layer parameter maxNrofCSI-ReportConfigurations.

Optionally, the terminal, wherein processor 320 determines a priority value $Pri_{iCSI}(y, k, c, s, f)$ of each CSI report among the N CSI reports according to at least one of a serving cell identifier, a type of the CSI report, and a report configuration identifier of the CSI report by using the following formula:

$$Pri_{iCSI}(y, k, c, s, f) = 6 \cdot N_{cells} \cdot M_s \cdot f + 2 \cdot N_{cells} \cdot M_s \cdot y + N_{cells} \cdot M_s \cdot k + M_s \cdot c + s ;$$

wherein f represents a priority weighting factor indicated by a network device;

y represents a CSI report type indication value, wherein different types of CSI reports correspond to different values of y;

k represents a third value or a fourth value, the third value representing that the CSI report carries L1-RSRP or L1-SINR; the fourth value representing that the CSI report does not carry L1-RSRP or L1-SINR;

c represents a serving cell identifier configured by high-layer signaling; $N_{cells}$ represents a value of a high-layer parameter maxNrofServingCells;

s represents a report configuration identifier reportConfigID configured by high-layer signaling; $M_s$ represents a value of a high-layer parameter maxNrofCSI-ReportConfigurations.

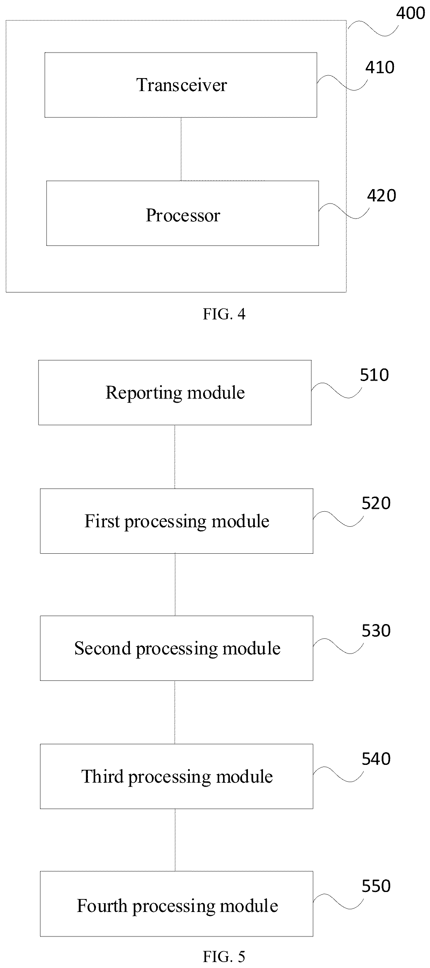

In one embodiment of the present invention, a network device is further provided, as shown in Fig. 4, the network device 400 comprising a transceiver 410 and a processor 420, wherein the transceiver 410 is configured to:

receive first information and/or second information reported by a terminal;

wherein the first information comprises a number of first type CSI calculations that the terminal can simultaneously support; the CSI report of the first type CSI calculation is a first type CSI report;

the second information comprises a number of second type CSI calculations that the terminal can simultaneously support, and the CSI report of the second type CSI calculation comprises the first type CSI report and a second type CSI report.

Optionally, in the network device, the processor 420 is configured to:
determine a processing manner of the CSI report transmitted by the terminal according to the first information and/or the second information reported by the terminal.

In one embodiment of the present invention, a calculation apparatus of a channel state information CSI processing unit is further provided, applied to a terminal, as shown in Fig. 5, the apparatus comprising:

a reporting module 510 configured to report first information and/or second information to a network device;
wherein the first information comprises a number of first type CSI calculations that the terminal can simultaneously support, and the CSI report of the first type CSI calculation is a first type CSI report;
the second information comprises a number of second type CSI calculations that the terminal can simultaneously support, and the CSI report of the second type CSI calculation comprises the first type CSI report and the second type CSI report.

Optionally, in the calculation apparatus, the apparatus further comprises:
a first processing module 520 configured to determine a number of CPUs of a CSI processing unit required to be occupied by the CSI report according to a type of the CSI report configured by high-layer signaling.

Optionally, in the calculation apparatus, the apparatus further comprises:
a second processing module 530 configured to determine a number of CPUs occupied by the CSI report according to at least one of preset rules, network device configuration, and UE capability reporting.

Optionally, in the calculation apparatus, in a case of reporting the first information to the network device, the second processing module 530 determines a number of CPUs occupied by the CSI report according to preset rules, comprising one or more of:

determining that a CSI report corresponding to high-layer signaling configuration of a non-first type CSI report does not occupy a CPU;
determining that a CSI report in which a CSI reporting quantity is configured as none and a corresponding CSI-RS resource set is configured with a trs-Info parameter does not occupy a CPU;
determining that a CSI report in which a CSI reporting quantity comprises a first parameter and is not a first type CSI report does not occupy a CPU; the first parameter comprises one or more of: channel state information reference signal resource indicator-reference signal receiving power (cri-RSRP); synchronization signal block index-reference signal receiving power (ssb-Index-RSRP); channel state information reference signal resource indicator-signal to interference plus noise ratio (cri-SINR); synchronization signal block index-signal to interference plus noise ratio (ssb-Index-SINR); none and a corresponding CSI-RS resource set is not configured with a trs-Info parameter;
determining that a CSI report in which a CSI reporting quantity comprises a second parameter and is a first type CSI report occupies a number of CPUs related to a number of CSI-RS resources in a CSI-RS resource set configured by a network device; the second parameter comprises one or more of: cri-RSRP; ssb-Index-RSRP; cri-SINR; ssb-Index-SINR; none and a corresponding CSI-RS resource set is not configured with a trs-Info parameter;
determining that a CSI report in which a CSI reporting quantity comprises at least one of channel state information reference signal resource indicator-rank indicator-precoding matrix indicator-channel quality indicator (cri-RI-PMI-CQI) and channel state information reference signal resource indicator-rank indicator-layer indicator-precoding matrix indicator-channel quality indicator (cri-RI-LI-PMI-CQI) occupies a number of CPUs related to a number of CSI-RS resources in a CSI-RS resource set for channel measurement;
determining that a CSI report satisfying a first condition and in which a CSI reporting quantity is not cri-RI-PMI-CQI or cri-RI-LI-PMI-CQI does not occupy a CPU; the first condition comprises one or more of: the CSI report not belonging to a non-first type CSI report configured by high-layer signaling; the CSI report not belonging to a CSI report in which a CSI reporting quantity is none and a corresponding CSI-RS resource set is configured with a trs-Info parameter; the CSI report not belonging to a CSI report in which a CSI reporting quantity is a seventh parameter; the seventh parameter comprises one or more of: cri-RSRP; ssb-Index-RSRP; cri-SINR; ssb-Index-SINR; none and a corresponding CSI-RS resource set is not configured with a trs-Info parameter.

Optionally, in the calculation apparatus, in a case of reporting the second information to the network device, the second processing module 530 determines a number of CPUs occupied by the CSI report according to preset rules, comprising one or more of:

determining that a CSI report in which a CSI reporting quantity is none and a corresponding CSI-RS resource set is configured with a trs-Info parameter does not occupy a CPU;

determining that a CSI report in which a CSI reporting quantity comprises a third parameter and is not a first type CSI report occupies one CPU; the third parameter comprises one or more of: cri-RSRP; ssb-Index-RSRP; cri-SINR; ssb-Index-SINR; none and a corresponding CSI-RS resource set is not configured with a trs-Info parameter;

determining that a CSI report in which a CSI reporting quantity comprises a fourth parameter and is a first type CSI report occupies a number of CPUs related to a number of CSI-RS resources in a CSI-RS resource set configured by a network device; the fourth parameter comprises one or more of: cri-RSRP; ssb-Index-RSRP; cri-SINR; ssb-Index-SINR; none and a corresponding CSI-RS resource set is not configured with a trs-Info parameter.

Optionally, in the calculation apparatus, the second processing module 530 determines a number of CPUs occupied by the CSI report according to network device configuration, comprising one or more of:

determining a number of CPUs occupied by a CSI report in which a CSI reporting quantity comprises a fifth parameter and is a first type CSI report according to network device configuration; the fifth parameter comprises one or more of: cri-RSRP; ssb-Index-RSRP; cri-SINR; ssb-Index-SINR; none and a corresponding CSI-RS resource set is not configured with a trs-Info parameter;

determining a number of CPUs occupied by a CSI report in which a CSI reporting quantity comprises at least one of cri-RI-PMI-CQI and cri-RI-LI-PMI-CQI according to network device configuration.

Optionally, in the calculation apparatus, determining a number of CPUs occupied by the CSI report according to UE capability reporting comprises one or more of:

determining a number of CPUs occupied by a CSI report in which a CSI reporting quantity comprises a sixth parameter and is a first type CSI report according to UE capability reporting; the sixth parameter comprises one or more of: cri-RSRP; ssb-Index-RSRP; cri-SINR; ssb-Index-SINR; none and a corresponding CSI-RS resource set is not configured with a trs-Info parameter;

determining a number of CPUs occupied by a CSI report in which a CSI reporting quantity comprises at least one of cri-RI-PMI-CQI and cri-RI-LI-PMI-CQI according to UE capability reporting.

Optionally, in the calculation apparatus, the second processing module 530 determines a number of CPUs occupied by the CSI report according to UE capability reporting, comprising:

in a case where the terminal reports a first capability condition, determining that a number of CPUs occupied by the CSI report is a first number;

in a case where the terminal reports a second capability condition, determining that a number of CPUs occupied by the CSI report is a second number;

wherein the second number is greater than or equal to the first number.

Optionally, in the calculation apparatus, the apparatus further comprises:

a third processing module 540 configured to determine an occupation time interval of CPUs occupied by first type CSI reports by adopting at least one of the following rules:

for aperiodic CSI reporting, determining the occupation time interval of CPUs occupied by the CSI report as: from a first symbol after a physical downlink control channel (PDCCH) triggering the corresponding CSI report to a last symbol of a physical uplink shared channel (PUSCH) carrying the corresponding CSI report;

for first CSI reporting of semi-persistent CSI reporting borne on a PUSCH triggered by a PDCCH, determining the occupation time interval of CPUs occupied by the corresponding CSI report as: from a first symbol after the PDCCH to a last symbol of the PUSCH carrying the corresponding CSI report;

for periodic or semi-persistent CSI reporting other than first CSI reporting of semi-persistent CSI reporting borne on a PUSCH triggered by a PDCCH, determining the occupation time interval of CPUs occupied by the corresponding CSI report as: from a first symbol of an earliest one of measurement signal resources for channel measurement or interference measurement to a last symbol of an uplink transmission resource carrying the corresponding CSI report.

Optionally, in the calculation apparatus, the apparatus further comprises:

a fourth processing module 550, configured to, in a case where L CPUs are occupied by CSI reports, determine $N_{CPU} - L$ CPUs as being unoccupied; wherein, when the terminal reports first information to a network device, $N_{CPU}$ is a maximum number of first-type CSI computations that the terminal is capable of processing simultaneously, the number $N_{CPU}$ being equal to a number of CPUs of the terminal usable for processing first-type CSI reports; and/or, when the terminal reports second information to the network device, $N_{CPU}$ is a number of second-type CSI computations that the terminal is capable of supporting simultaneously, the number $N_{CPU}$ being equal to a number of CPUs of the terminal usable for CSI report processing.

Optionally, in the calculation apparatus, the fourth processing module 550 determines a distribution rule of the $N_{CPU}$ - L CPUs by adopting the following manner:

according to an arrangement order of N CSI reports from high to low in priority, selecting M CSI reports among the N CSI reports with priorities ranked in the front to occupy the $N_{CPU}$ - L CPUs, wherein M is a maximum number of CSI reports among the N CSI reports that can occupy the $N_{CPU}$ - L CPUs; N is an integer greater than or equal to 0, and M is less than or equal to N.

Optionally, in the calculation apparatus, the fourth processing module 550 is further configured to:

not require other CSI reports among the N CSI reports except the M CSI reports to update CSI reports.

Optionally, in the calculation apparatus, the fourth processing module 550 is further configured to:

determine a priority value of each CSI report among the N CSI reports according to at least one of a serving cell identifier, a type of the CSI report, and a report configuration identifier of the CSI report; or determine a priority value of each CSI report among the N CSI reports according to indication information sent by a network device.

Optionally, in the calculation apparatus, in a case of reporting the second information to the network device, when the fourth processing module 550 determines a priority value of each CSI report among the N CSI reports according to at least one of a serving cell identifier, a type of the CSI report, and a report configuration identifier of the CSI report, the determined priority is further related to whether the corresponding CSI report is a first type CSI report.

Optionally, the computing device, wherein in a case of reporting second information to a network device, a fourth processing module 550 determines a priority value $Pri_{iCSI}(y, k, c, s, x)$ of each CSI report among the N CSI reports according to at least one of a serving cell identifier, a type of the CSI report, and a report configuration identifier of the CSI report by using the following formula:

$$Pri_{iCSI}(y, k, c, s, x) = 6 \cdot N_{cells} \cdot M_s \cdot x + 2 \cdot N_{cells} \cdot M_s \cdot y + N_{cells} \cdot M_s \cdot k + M_s \cdot c + s$$

wherein x is a first value or a second value, the first value representing that the CSI report is of the first type; the second value representing that the CSI report is not of the first type;

y represents a CSI report type indication value, wherein different types of CSI reports correspond to different values of y;

k represents a third value or a fourth value, the third value representing that the CSI report carries L1-RSRP or L1-SINR; the fourth value representing that the CSI report does not carry L1-RSRP or L1-SINR;

c represents a serving cell identifier configured by high-layer signaling; $N_{cells}$ represents a value of a high-layer parameter maxNrofServingCells;

s represents a report configuration identifier reportConfigID configured by high-layer signaling; $M_s$ represents a value of a high-layer parameter maxNrofCSI-ReportConfigurations.

Optionally, the computing device, wherein a fourth processing module 550 determines a priority value $Pri_{iCSI}(y, k, c, s, f)$ of each CSI report among the N CSI reports according to at least one of a serving cell identifier, a type of the CSI report, and a report configuration identifier of the CSI report by using the following formula:

$$Pri_{iCSI}(y, k, c, s, f) = 6 \cdot N_{cells} \cdot M_s \cdot f + 2 \cdot N_{cells} \cdot M_s \cdot y + N_{cells} \cdot M_s \cdot k + M_s \cdot c + s$$

wherein f represents a priority weighting factor indicated by a network device;

y represents a CSI report type indication value, wherein different types of CSI reports correspond to different values of y;

k represents a third value or a fourth value, the third value representing that the CSI report carries L1-RSRP or L1-SINR; the fourth value representing that the CSI report does not carry L1-RSRP or L1-SINR;

c represents a serving cell identifier configured by high-layer signaling; $N_{cells}$ represents a value of a high-layer parameter maxNrofServingCells;

s represents a report configuration identifier reportConfigID configured by high-layer signaling; $M_s$ represents a value of a high-layer parameter maxNrofCSI-ReportConfigurations.

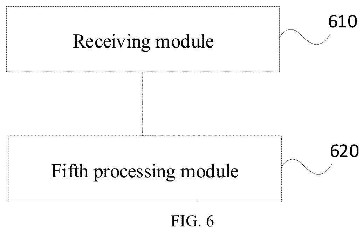

In another embodiment of the present invention, a calculation apparatus of a channel state information CSI processing unit is further provided, applied to a network device, as shown in Fig. 6, the apparatus comprising:

a receiving module 610 configured to receive first information and/or second information reported by a terminal; wherein the first information comprises a number of first type CSI calculations that the terminal can simultaneously support; the CSI report of the first type CSI calculation is a first type CSI report;

the second information comprises a number of second type CSI calculations that the terminal can simultaneously support, and the CSI report of the second type CSI calculation comprises the first type CSI report and a second type CSI report.

Optionally, in the calculation apparatus, the apparatus further comprises:
a fifth processing module 620 configured to determine a processing manner of the CSI report transmitted by the terminal according to the first information and/or the second information reported by the terminal.

In an embodiment of the present invention, a terminal is further provided, comprising: a processor, a memory, and a program stored in the memory and operable on the processor, wherein when executed by the processor, the program implements the calculation method of the channel state information CSI processing unit according to any one of the foregoing embodiments.

Specifically, a detailed implementation process of executing the calculation method of the CSI processing unit by the processor of the terminal is as described above, and is not repeated herein.

In an embodiment of the present invention, a network device is further provided, comprising: a processor, a memory, and a program stored in the memory and operable on the processor, wherein when executed by the processor, the program implements the calculation method of the channel state information CSI processing unit according to any one of the foregoing embodiments.

Specifically, a detailed implementation process of executing the calculation method of the CSI processing unit by the processor of the network device is as described above, and is not repeated herein.

In addition, in specific embodiments of the present invention, a computer-readable storage medium is further provided, on which a computer program is stored, wherein when executed by a processor, the program implements the steps in the calculation method of the channel state information CSI processing unit according to any one of the foregoing embodiments.

Specifically, the computer-readable storage medium is applied to the terminal or the network device described above, and when applied to the terminal or the network device, the execution steps in the calculation method of the corresponding channel state information CSI processing unit are as described in detail above, and are not described herein again.

In the several embodiments provided in the present application, it should be understood that the disclosed methods and apparatuses may also be implemented in other manners. For example, the apparatus embodiments described above are merely illustrative, and division of the units is merely logical functional division. In actual implementation, another division manner may be adopted. For example, a plurality of units or components may be combined, or may be integrated into another system, or some features may be omitted, or may not be executed. In another aspect, the couplings, direct couplings, or communication connections shown or discussed may be indirect couplings or communication connections via some interfaces, devices, or units, and may be electrical, mechanical, or other forms.

In addition, in the embodiments of the present invention, respective functional units may be integrated into one processing unit, or each unit may be physically included separately, or two or more units may be integrated into one unit. The integrated unit can be implemented in the form of hardware, or in the form of a hardware plus software functional unit.

The integrated unit implemented in the form of a software functional unit can be stored in a computer-readable storage medium. The software functional unit stored in a storage medium comprises a plurality of instructions for enabling a computer device (which may be a personal computer, a server, or a network device, etc.) to execute partial steps of the transceiving method described in the embodiments of the present invention. The aforementioned storage medium comprises: a USB flash disk, a mobile hard disk, a read-only memory (ROM), a random access memory (RAM), a magnetic disk, or an optical disk, and other media capable of storing program codes.

The above described are preferred embodiments of the present invention. It should be noted that for those skilled in the art, several modifications and embellishments can be made without departing from the principles of the present invention. These modifications and embellishments shall also be regarded as falling within the protection scope of the present invention.

## Claims

1. A method for calculating a channel state information (CSI) processing unit, **characterized in that** the method is performed by a terminal, comprising:

   transmitting, by the terminal, first information and/or second information to a network device;

wherein the first information comprises a value for the number of supported simultaneous first-type CSI calculations, and the first-type CSI calculation is for a first-type CSI report;

and the second information comprises a value for the number of supported simultaneous second-type CSI calculations, and the second-type CSI calculation is for the first-type CSI report and a second-type CSI report.

2. The method according to claim 1, wherein the method further comprises:
determining, according to a type of a CSI report configured by higher layer signaling, a number of CSI processing unit, CPUs occupied by the CSI report.

3. The method according to claim 1, wherein the method further comprises:
determining, according to at least one of a preset rule, a network device configuration, and a UE capability reporting, a number of CPUs occupied by processing the CSI report.

4. The method according to claim 3, wherein in a case where the first information is transmitted to the network device, determining, according to a preset rule, a number of CPUs occupied by the CSI report comprises at least one of the following:

for a CSI report configured not being a first-type CSI report by higher layer signaling, determining that the corresponding CSI report does not occupy a CPU;

for a CSI report with the configured CSI report quantity set to "none" and a corresponding CSI-RS resource set with a tracking reference signal parameter trs-Info configured, determining that the corresponding CSI report does not occupy a CPU;

for a CSI report in which the configured CSI report quantity comprises a first parameter and is not a first-type CSI report, determining that the corresponding CSI report does not occupy a CPU; wherein the first parameter comprises at least one of: channel state information reference signal resource indicator - reference signal received power (cri-RSRP); synchronization signal block index - reference signal received power (ssb-Index-RSRP); channel state information reference signal resource indicator - signal to interference plus noise ratio (cri-SINR); synchronization signal block index - signal to interference plus noise ratio (ssb-Index-SINR); or "none" (and a corresponding CSI-RS resource set is not configured with the trs-Info parameter);

for a CSI report in which the configured CSI report quantity comprises a second parameter and is a first-type CSI report, determining that the number of CPUs occupied by the corresponding CSI report is related to a number of CSI-RS resources in a CSI-RS resource set configured by the network device; wherein the second parameter comprises at least one of: cri-RSRP; ssb-Index-RSRP; cri-SINR; ssb-Index-SINR; or "none" (and a corresponding CSI-RS resource set is not configured with the trs-Info parameter);

for a CSI report in which the configured CSI report quantity comprises at least one of channel state information reference signal resource indicator - rank indicator - precoding matrix indicator - channel quality indicator (cri-RI-PMI-CQI) and channel state information reference signal resource indicator - rank indicator - layer indicator - precoding matrix indicator - channel quality indicator (cri-RI-LI-PMI-CQI), determining that the number of CPUs occupied by the corresponding CSI report is related to a number of CSI-RS resources in a CSI-RS resource set for channel measurement;

for a CSI report satisfying a first condition and the configured CSI report quantity not being one of cri-RI-PMI-CQI and cri-RI-LI-PMI-CQI, determining that the corresponding CSI report does not occupy a CPU; wherein the first condition comprises at least one of the following: the CSI report is not a CSI report configured not being a first-type CSI report by higher layer signaling; the CSI report is not a CSI report in which the configured CSI report quantity is "none" and the corresponding CSI-RS resource set is configured with the trs-Info parameter; the CSI report is not a CSI report in which the configured CSI report quantity is a seventh parameter; wherein the seventh parameter comprises at least one of: cri-RSRP; ssb-Index-RSRP; cri-SINR; ssb-Index-SINR; or "none" (and a corresponding CSI-RS resource set is not configured with the trs-Info parameter).

5. The method according to claim 3, wherein in a case where the second information is transmitted to the network device, determining, according to a preset rule, a number of CPUs occupied by the CSI report comprises at least one of the following:

for a CSI report with the configured CSI report quantity set is "none" and a corresponding CSI-RS resource set with the trs-Info parameter, determining that the corresponding CSI report does not occupy a CPU;

for a CSI report in which the configured CSI report quantity comprises a third parameter and is not a first-type CSI report, determining that the number of CPUs occupied by the corresponding CSI report is 1; wherein the third parameter comprises at least one of: cri-RSRP; ssb-Index-RSRP; cri-SINR; ssb-Index-SINR; or "none" (and a corresponding CSI-RS resource set is not configured with the trs-Info parameter);

for a CSI report in which the configured CSI report quantity comprises a fourth parameter and is a first-type CSI report, determining that the number of CPUs occupied by the corresponding CSI report is related to a number of CSI-RS resources in a CSI-RS resource set configured by the network device; wherein the fourth parameter comprises at least one of: cri-RSRP; ssb-Index-RSRP; cri-SINR; ssb-Index-SINR; or "none" (and a corresponding CSI-RS resource set is not configured with the trs-Info parameter).

6.  The method according to claim 3, wherein determining, according to a network device configuration, a number of CPUs occupied by the CSI report comprises at least one of the following:

for a CSI report in which the configured CSI report quantity comprises a fifth parameter and is a first-type CSI report, determining, according to the network device configuration, a number of CPUs occupied by the CSI report; wherein the fifth parameter comprises at least one of: cri-RSRP; ssb-Index-RSRP; cri-SINR; ssb-Index-SINR; or "none" (and a corresponding CSI-RS resource set is not configured with the trs-Info parameter);

for a CSI report in which the configured CSI report quantity comprises at least one of cri-RI-PMI-CQI and cri-RI-LI-PMI-CQI, determining, according to the network device configuration, a number of CPUs occupied by the CSI report.

7.  The method according to claim 3, wherein determining, according to a UE capability reporting, a number of CPUs occupied by the CSI report comprises at least one of the following:

for a CSI report in which the configured CSI report quantity comprises a sixth parameter and is a first-type CSI report, determining, according to the UE capability reporting, a number of CPUs occupied by the CSI report; wherein the sixth parameter comprises at least one of: cri-RSRP; ssb-Index-RSRP; cri-SINR; ssb-Index-SINR; or "none" (and a corresponding CSI-RS resource set is not configured with the trs-Info parameter);

for a CSI report in which the configured CSI report quantity comprises at least one of cri-RI-PMI-CQI and cri-RI-LI-PMI-CQI, determining, according to the UE capability reporting, a number of CPUs occupied by the CSI report.

8.  The method according to claim 3 or 7, wherein determining, according to the UE capability reporting, a number of CPUs occupied by the CSI report comprises:

when the UE reports a first capability, determining that the number of CPUs occupied by the CSI report is a first number;

when the UE reports a second capability, determining that the number of CPUs occupied by the CSI report is a second number;

wherein the second number is greater than or equal to the first number.

9.  The method according to claim 1, wherein the method further comprises:
determining, according to at least one of the following rules, a time of CPU occupation for a first-type CSI report:

for aperiodic CSI report, determining that the time of CPU occupation of the CSI report is from a first symbol after a physical downlink control channel (PDCCH) triggering the CSI report to a last symbol of a physical uplink shared channel (PUSCH) carrying the CSI report;

for an initial semi-persistent CSI report on the PUSCH after the PDCCH trigger, determining that the time of CPU occupation of the CSI report is from a first symbol after the PDCCH to a last symbol of the PUSCH carrying the CSI report;

for periodic CSI report or semi-persistent CSI report (excluding the initial semi-persistent CSI report on the PUSCH after the PDCCH triggering the report), determining that the time of CPU occupation of the CSI report is from a first symbol of an earliest one of each signal resource for channel or interference measurement to a last symbol of an uplink transmission resource carrying the report.

10.  The method according to claim 1 or 8, wherein the method further comprises:

in a case if L CPUs are occupied by CSI reports, $N_{CPU}$ - L CPUs are unoccupied;

wherein, when the terminal transmits first information to a network device, $N_{CPU}$ is a value for the number of supported simultaneous first-type CSI calculations, the number $N_{CPU}$ being equal to a number of CPUs of the terminal for processing first-type CSI reports; and/or, when the terminal transmits second information to the network device, $N_{CPU}$ is a value for the number of supported simultaneous second-type CSI calculations, the number $N_{CPU}$ being equal to a number of CPUs of the terminal for processing CSI reports.

11. The method according to claim 10, wherein determining an occupation rule of the $N_{CPU}$ - L CPUs comprises: selecting, according to a priority order of N CSI reports from high to low, M CSI reports with higher priority among the N CSI reports to occupy the $N_{CPU}$ - L CPUs; wherein M is a maximum number of CSI reports among the N CSI reports capable of occupying the $N_{CPU}$ - L CPUs; N is an integer greater than or equal to 0, and M is less than or equal to N.

12. The method according to claim 11, wherein the method further comprises:
for the N CSI reports, other than the M CSI reports, the other CSI reports are not required to be updated.

13. The method according to claim 11, wherein the method further comprises:
determining, according to at least one of a serving cell index, a type of the CSI report, and a report config ID of the CSI report, a priority value of each of the N CSI reports; or determining, according to indication information transmitted by the network device, a priority value of each of the N CSI reports.

14. The method according to claim 13, wherein in a case where the second information is transmitted to the network device, determining, according to at least one of the serving cell identity, the type of the CSI report, and the report configuration identity of the CSI report, the priority value of each of the N CSI reports further relates to whether the corresponding CSI report is a first-type CSI report.

15. The method according to claim 14, wherein, in a case of reporting second information to a network device, the following formula is adopted to determine a priority value $Pri_{iCSI}$ (y, k, c, s, x) of each CSI report among the N CSI reports according to at least one of a serving cell identifier, a type of the CSI report, and a report configuration identifier of the CSI report:

$$Pri_{iCSI} (y, k, c, s, x) = 6 \cdot N_{cells} \cdot M_s \cdot x + 2 \cdot N_{cells} \cdot M_s \cdot Y + N_{cells} \cdot M_s \cdot k + M_s \cdot c + s;$$

wherein x is a first value or a second value, the first value indicating that the CSI report is a first-type CSI report, and the second value indicating that the CSI report is not a first-type CSI report;
y is a CSI report type indication value, and different CSI report types correspond to different values of y;
k is a third value or a fourth value, the third value indicating that the CSI report carries a layer-1 reference signal received power (L1-RSRP) or a layer-1 signal-to-interference-plus-noise ratio (L1-SINR), and the fourth value indicating that the CSI report does not carry the L1-RSRP or the L1-SINR;
c is a serving cell identity configured by higher layer signaling, $N_{cells}$ is a value of a higher layer parameter maxNrofServingCells;
s is a report configuration identity reportConfigID configured by higher layer signaling, $M_3$ is a value of a higher layer parameter maxNrofCSI-ReportConfigurations.

16. The method according to claim 13 or 14, wherein the following formula is adopted to determine a priority value $Pri_{iCSI}$ (y, k, c, s, f) of each CSI report among the N CSI reports according to at least one of a serving cell identifier, a type of the CSI report, and a report configuration identifier of the CSI report:

$$Pri_{iCSI} (y, k, C, s, f) = 6 \cdot N_{cells} \cdot M_s \cdot f + 2 \cdot N_{cells} \cdot M_s \cdot y + N_{cells} \cdot M_s \cdot k + M_s \cdot c + s;$$

wherein f is a priority weight factor indicated by the network device;
y is a CSI report type indication value, and different CSI report types correspond to different values of y;
k is a third value or a fourth value, the third value indicating that the CSI report carries L1-RSRP or L1-SINR, and the fourth value indicating that the CSI report does not carry the L1-RSRP or the L1-SINR;
c is a serving cell identity configured by higher layer signaling, $N_{cells}$ is a value of a higher layer parameter maxNrofServingCells;
s is a report configuration identity reportConfigID configured by higher layer signaling, $M_3$ is a value of a higher layer parameter maxNrofCSI-ReportConfigurations.

17. A method for calculating a channel state information (CSI) processing unit, **characterized in that** the method is performed by a network device, comprising:

receiving, by the network device, first information and/or second information reported by a terminal;

wherein the first information comprises a value for the number of supported simultaneous first-type CSI calculations, and the first-type CSI calculation is for a first-type CSI report;

and the second information comprises a value for the number of supported simultaneous second-type CSI calculations, and the second-type CSI calculation is for the first-type CSI report and a second-type CSI report.

18. The method according to claim 17, wherein the method further comprises:

determining, according to the first information and/or the second information reported by the terminal, a processing manner of a CSI report transmitted by the terminal.

19. A terminal, comprising a transceiver, wherein the transceiver is configured to:

transmit, to a network device, first information and/or second information;

wherein the first information comprises a value for the number of supported simultaneous first-type CSI calculations, and the first-type CSI calculation is for a first-type CSI report;

and the second information comprises a value for the number of supported simultaneous second-type CSI calculations, and the second-type CSI calculation is for the first-type CSI report and a second-type CSI report.

20. A network device, comprising a transceiver, wherein the transceiver is configured to:

receive, from a terminal, first information and/or second information;

wherein the first information comprises

a value for the number of supported simultaneous first-type CSI calculations, and the first-type CSI calculation is for a first-type CSI report;

and the second information comprises a value for the number of supported simultaneous second-type CSI calculations, and the second-type CSI calculation is for the first-type CSI report and a second-type CSI report.

21. A calculating apparatus of a channel state information (CSI) processing unit, **characterized in that** the apparatus is applied to a terminal, comprising:

a reporting module, configured to transmit, to a network device, first information and/or second information;

wherein the first information comprises a number of first-type CSI computations that the terminal is capable of supporting simultaneously, and a CSI report of the first-type CSI computation is a first-type CSI report;

and the second information comprises a number of second-type CSI computations that the terminal is capable of supporting simultaneously, and a CSI report of the second-type CSI computation comprises the first-type CSI report and a second-type CSI report.

22. A calculating apparatus of a channel state information (CSI) processing unit, **characterized in that** the apparatus is applied to a network device, comprising:

a receiving module, configured to receive, from a terminal, first information and/or second information;

wherein the first information comprises a number of first-type CSI computations that the terminal is capable of supporting simultaneously, and a CSI report of the first-type CSI computation is a first-type CSI report;

and the second information comprises a number of second-type CSI computations that the terminal is capable of supporting simultaneously, and a CSI report of the second-type CSI computation comprises the first-type CSI report and a second-type CSI report.

23. A terminal, comprising a processor, a memory, and a program stored on the memory and operable on the processor, wherein when executed by the processor, the program implements the method for calculating the channel state information (CSI) processing unit according to any one of claims 1 to 16.

24. A network device, comprising a processor, a memory, and a program stored on the memory and operable on the processor, wherein when executed by the processor, the program implements the method for calculating the channel state information (CSI) processing unit according to any one of claims 17 to 18.

25. A computer-readable storage medium, wherein a program is stored on the computer-readable storage medium, and when executed by a processor, the program implements the steps of the method for calculating the channel state information (CSI) processing unit according to any one of claims 1 to 16, or implements the steps of the method for calculating the channel state information (CSI) processing unit according to any one of claims 17 to 18.

Reporting first information and/or second information to a network device;
wherein the first information includes a number of first-type CSI calculations that the terminal is capable of supporting simultaneously, and a CSI report of the first-type CSI calculation is a first-type CSI report;
the second information includes a number of second-type CSI calculations that the terminal is capable of supporting simultaneously, and a CSI report of the second-type CSI calculation includes the first-type CSI report and a second-type CSI report.

S110

FIG. 1

Receiving first information and/or second information reported by a terminal;
wherein the first information includes a number of first-type CSI calculations that the terminal is capable of supporting simultaneously, and a CSI report of the first-type CSI calculation is a first-type CSI report;
the second information includes a number of second-type CSI calculations that the terminal is capable of supporting simultaneously, and a CSI report of the second-type CSI calculation includes the first-type CSI

S210

FIG. 2

300

Transceiver

310

Processor

320

FIG. 3

400

Transceiver 410

Processor 420

FIG. 4

Reporting module 510

First processing module 520

Second processing module 530

Third processing module 540

Fourth processing module 550

FIG. 5

Receiving module 610

Fifth processing module 620

FIG. 6

## INTERNATIONAL SEARCH REPORT

| International application No. |
| --- |
| **PCT/CN2024/084476** |

| A. | CLASSIFICATION OF SUBJECT MATTER |
| --- | --- |

H04W 24/10(2009.01)i

According to International Patent Classification (IPC) or to both national classification and IPC

| B. | FIELDS SEARCHED |
| --- | --- |

Minimum documentation searched (classification system followed by classification symbols)

IPC: H04W 24/-

Documentation searched other than minimum documentation to the extent that such documents are included in the fields searched

Electronic data base consulted during the international search (name of data base and, where practicable, search terms used)

CNABS: CNTXT; CNKI: CSI处理单元, CPU, 计算, 占用, 数目, 数量, CSI报告, 反馈, 类型, AI, CSI-RS, TRS, RSRP, SINR, 索引, index, PMI, CQI, 时间, 符号, 优先级 VEN; WOTXT; EPTXT; USTXT; 3GPP: CSI processing unit?, CPU, number, CSI report+, type, AI, CSI-RS, TRS, RSRP, SINR, index, PMI, CQI, symbol, priority

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | ERICSSON. "R1-1809828 Summary of Views on CSI Reporting V4" *3GPP TSG-RAN WG1 Meeting #94*, 24 August 2018 (2018-08-24), pages 7-11, 17-20, and 23 | 1-25 |
| A | CN 110971382 A (VIVO MOBILE COMMUNICATION CO., LTD.) 07 April 2020 (2020-04-07) entire document | 1-25 |
| A | CN 115150880 A (BEIJING UNISOC COMMUNICATIONS TECHNOLOGY CO., LTD.) 04 October 2022 (2022-10-04) entire document | 1-25 |
| A | CN 113517967 A (VIVO MOBILE COMMUNICATION CO., LTD.) 19 October 2021 (2021-10-19) entire document | 1-25 |
| A | CN 113596908 A (GUANGDONG OPPO MOBILE TELECOMMUNICATIONS CORP., LTD.) 02 November 2021 (2021-11-02) entire document | 1-25 |

☑ Further documents are listed in the continuation of Box C.   ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 May 2024** | **14 May 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/084476** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2022031122 A1 (LG ELECTRONICS, INC.) 10 February 2022 (2022-02-10) entire document | 1-25 |

Form PCT/ISA/210 (second sheet) (July 2022)

## INTERNATIONAL SEARCH REPORT
### Information on patent family members

International application No.

**PCT/CN2024/084476**

| Patent document cited in search report | | | Publication date (day/month/year) | Patent family member(s) | | | Publication date (day/month/year) |
|---|---|---|---|---|---|---|---|
| CN | 110971382 | A | 07 April 2020 | EP | 3860019 | A1 | 04 August 2021 |
| | | | | JP | 2022501967 | A | 06 January 2022 |
| | | | | JP | 7285920 | B2 | 02 June 2023 |
| | | | | US | 2021218453 | A1 | 15 July 2021 |
| | | | | KR | 20210065181 | A | 03 June 2021 |
| | | | | AU | 2019351179 | A1 | 27 May 2021 |
| | | | | AU | 2019351179 | B2 | 22 December 2022 |
| | | | | CA | 3114818 | A1 | 02 April 2020 |
| | | | | CN | 110971382 | B | 07 April 2023 |
| | | | | WO | 2020063211 | A1 | 02 April 2020 |
| | | | | SG | 11202103262 | A1 | 29 April 2021 |
| | | | | VN | 79496 | A | 26 July 2021 |
| | | | | IN | 202127019633 | A | 08 October 2021 |
| | | | | RU | 2773430 | C1 | 03 June 2022 |
| CN | 115150880 | A | 04 October 2022 | None | | | |
| CN | 113517967 | A | 19 October 2021 | CN | 113517967 | B | 09 September 2022 |
| | | | | WO | 2021204208 | A1 | 14 October 2021 |
| CN | 113596908 | A | 02 November 2021 | US | 2022014957 | A1 | 13 January 2022 |
| | | | | EP | 3918830 | A1 | 08 December 2021 |
| | | | | EP | 3918830 | B1 | 09 August 2023 |
| | | | | WO | 2021057679 | A1 | 01 April 2021 |
| | | | | CN | 113596908 | B | 25 April 2023 |
| | | | | CN | 113302968 | A | 24 August 2021 |
| WO | 2022031122 | A1 | 10 February 2022 | EP | 4195526 | A1 | 14 June 2023 |
| | | | | KR | 20230048320 | A | 11 April 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310333273